# EUROPÄISCHE PATENTSCHRIFT

(11) **EP 2 303 902 B1**
(45) Veröffentlichungstag und Bekanntmachung des Hinweises auf die Patenterteilung: **21.08.2013**
(21) Anmeldenummer: 09777109.1
(22) Anmeldetag: 10.07.2009
(51) Int. Cl.: C07F 9/46

(54) **BIS(PERFLUORALKYL)PHOSPHINIGE SÄUREN UND DERIVATE SOWIE DEREN ANWENDUNG**
BIS(PERFLUORALKYL)PHOSPHINOUS ACIDS AND DERIVATES AND USE THEREOF
ACIDES BIS(PERFLUOROALKYL)PHOSPHINEUX ET DÉRIVÉS AINSI QUE LEUR UTILISATION

(30) Priorität: 25.07.2008 EP 08013426
(43) Veröffentlichungstag der Anmeldung: 06.04.2011
(73) Patentinhaber: Merck Patent GmbH, 64293 Darmstadt (DE)
(72) Erfinder: HOGE, Berthold, 33604 Bielefeld (DE); BADER, Anne Julia, 33615 Bielefeld (DE); KURSCHEID, Boris, 51145 Koeln (DE); IGNATYEV, Nikolai (Mykola), 47058 Duisburg (DE); AUST, Emil Ferdinand, 55130 Mainz (DE)
(86) Internationale Anmeldenummer: PCT/EP2009/005025
(87) Internationale Veröffentlichungsnummer: WO 2010/009818

(56) Entgegenhaltungen:
- DE-A1- 2 110 767
- CODELL, M.: "Hydrolysis of heptafluoropropylphosphonous diiodide and bisheptafluoropropylphosphinous iodide. Formation of bisheptafluoropropylphospine" JOURNAL OF CHEMICAL AND ENGINEERING DATA, Bd. 8, Nr. 3, 1963, Seite 460, XP002546060
- EMELEUS, SMITH: "The Heptafluorpropylphosphines and their Derivates" JOURNAL OF THE CHEMICAL SOCIETY, 1959, Seiten 375-381, XP002546061
- ANG, H. ET AL.: "Cyclic Phosphines and Arsines" AUSTRALIAN JOURNAL OF CHEMISTRY, Bd. 25, 1972, Seiten 493-498, XP009122722
- BERTHOLD HOGE ET AL: 'The Bis(pentafluoroethyl)phosphinous Acid (C 2 F 5 ) 2 POH' CHEMISTRY - A EUROPEAN JOURNAL Bd. 15, Nr. 14, 23 März 2009, Seiten 3567 - 3576, XP055025196 DOI: 10.1002/chem.200801837 ISSN: 0947-6539

## Beschreibung

Die Erfindung betrifft Metallkomplexe für katalytische Prozesse gemäβ Anspruch 1.

Phosphinige Säuren sind von großem Interesse für die Synthese von luftstabilen Metallkomplexen für die homogene Katalyse. Bekannt sind Polladiumkomplexe mit Bis(tert-butyl)phosphiniger Säure, die eine hohe Aktivität für die Kreuzkupplungsreaktionen haben, die zur Verknüpfung neuer C-C, C-N oder C-S-Bindungen führen.

In DE 2110767 werden die Phosphinigsäuren Bis(perfluorbutyl)phosphinigsäure, Bis(perfluorhexyl)phosphinigsäure und Bis(perfluoroctyl)phosphinigsäure beschrieben.

Die bisher bekannten phosphinigen Säuren mit Alkyl oder Arylgruppen sind sehr instabile Verbindungen und können nicht isoliert werden. Die Stabilisierung erfolgt in der Regel durch Komplexierung mit einem Übergangsmetall. Solche Übergangsmetallkomplexe werden beispielsweise von der Firma COMBIPHOS CATALYSIS Inc., Princeton, New Jersey, USA vertrieben.

Aufgabe der Erfindung war es, stabile phosphinige Säuren herzustellen, die sich zur Herstellung von Übergangsmetallkomplexen für die homogene Synthese eignen.

Überraschend wurde festgeatellt, dass phosphinige Säuren durch die Einführung von Perfluoralkylgruppen ab zwei C-Atomen am Phosphoratom in der Säureform stabilisiert werden können. Die bekannte Bis(trifluormethyl)phosphinige Säure (CF₃)₂POH ist zwar isolierbar, besitzt jedoch eine geringe Stabilität, ist pyrophor an Luft und deren komplexe Synthese verhindert die praktische Anwendung dieser Säure. Die geringe Stabilität wird wahrscheinlich durch die mögliche Eliminierung von Difluorcarben verursacht, ein Prozess, der in der Literatur für trifluormethylierte Phosphorverbindungen bekannt ist, beispielsweise in W.Mahler, Inorg. Chem. 2 (1963), 230.

Bis(pentafluorphenyl)phosphinige Säure, wie fälschlicherweise beschrieben in D.D. Magnelli, G. Tesi, j.U. Lowe, W.E. McQuistion, Inorg. Chem. 1966, 5, 457-461 existiert hingegen im festen Zustand aber auch in Lösungen von Chloroform, Toluol oder Diethylether ausschließlich in der Phosphinoxid-Form (C₆P₅)₂P(O)H und nicht in Form der phosphinigen Säure (C₆F₅)₂POH.

Die phosphinigen Säuren der Formel I, wie nachstehend erläutert, können im Gegensatz zu der bekannten Bis(trifluormethyl)phosphinigen Säure von industriell zugänglichen Materialien ausgehend synthetisiert werden. Zusätzlich wurde überraschend festgestellt, dass Salze der erfindungsgemäßen phosphinigen Säure hervorragende Eigenschaften haben und Insbesondere als ionische Flüssigkeiten Verwendung finden können.

Die thiophosphinigen Säuren der Formel I, wie nachstehend erläutert, können aus den Phosphinigsäurechloriden hergestellt werden.

Ionische Flüssigkeiten oder flüssige Salze sind ionische Spezies, die aus einem organischen Kation und einem in der Regel anorganischen oder organischen Anion bestehen. Sie enthalten keine neutralen Moleküle und weisen meistens Schmelzpunkte kleiner 373 K auf.

Die Eigenschaften ionischer Flüssigkeiten, z-B. Schmelzpunkt, thermische und elektrochemische Stabilität, Viskosität, werden stark von der Natur des Anions beeinflusst. Demgegenüber können die Polarität und die Hydrophilie bzw. Lipophilie durch die geeignete Wahl des Kation/Anion-Paares variiert werden.

Verbindungen der Formel I oder Salze der Formel II sind die folgendes Verbindungen 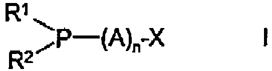 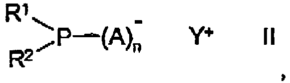 wobei
R¹ und R² jeweils unabhängig voneinander stehen für geradkettige oder verzweigte Perfluoralkylgruppen mit 2 bis 12 C-Atomen.
A steht für O oder S,
X steht für H, geradkettige oder verzweigte Alkylgruppen mit 1 bis 18 C-Atomen, Cycloalkyl mit 3 bis 7 Atomen, Alkenyl mit 2 bis 12 C-Atomen, Alkinyl mit 2 bis 12 C-Atomen, Aryl, Alkyl-Aryl, Si(R⁰)₃ oder Sn(R⁰)₃, wenn n für die ganze Zahl 1 steht,
X steht für H, Halogen, N(R⁰)₂, wenn n für die ganze Zahl 0 steht,
Y⁺ steht für Ammonium, Phosphonium, Tritylium, Guanidinium, heterocyclische Kationen, enthaltend mindestens ein Stickstoff- oder Phosphoratom, Ag⁺, Li⁺, Na⁺, K⁺, Rb⁺ oder Cs⁺, wenn n für die ganze Zahl 1 steht und
R⁰ steht für eine geradkettige oder verzweigte Alkylgruppe mit 1 bis 8 C-Atomen.

R¹ und R² können verschieden oder gleich sein. Besonders bevorzugt sind R¹ und R² gleich.

A steht bevorzugt für O.

Geradkettige oder verzweigte Perfluoralkylgruppen mit 2 bis 12 C-Atomen, entsprechen der Formel CₘF₂ₘ₊₁ mit m = 2, 3, 4, 5, 6, 7, 8, 9, 10, 11 oder 12. Bevorzugt stehen R¹ und R² jeweils unabhängig voneinander für Pentafluorethyl, Heptafluorpropyl oder lineares oder verzweigtes Nonafluorbutyl oder Perfluorhexyl. Ganz besonders bevorzugt stehen R¹ und R² für Pentafluorethyl oder lineares Nonafluorbutyl.

Geradkettige oder verzweigte Alkylgruppen mit 1 bis 4, 1 bis 6, 1 bis 8, 1 bis 12, 1 bis 18 oder 1 bis 20 C-Atomen entsprechen der Formel CₚH₂ₚ₊₁ mit p = 1, 2, 3 oder 4, oder 1, 2, 3, 4, 5 oder 6, oder 1, 2, 3, 4, 5, 6, 7 oder 8, oder 1, 2, 3, 4, 5, 6, 7, 8, 9, 10, 11 oder 12, oder 1, 2, 3, 4, 5, 6, 7, 8, 9, 10, 11, 12, 13, 14, 15, 16, 17 oder 18, oder 1, 2, 3, 4, 5, 6, 7, 8, 9, 10, 11, 12, 13, 14, 15, 16, 17, 18, 19 oder 20, beispielsweise Methyl, Ethyl, iso-Propyl, Propyl, Butyl, i-Butyl oder tert.-Butyl, ferner auch Pentyl, 1-, 2- oder 3-Methylbutyl, 1,1-, 1,2- oder 2,2-Dimethylpropyl, 1-Ethylpropyl oder Hexyl, ferner auch Heptyl, Octyl, ferner auch Nonyl, Decyl, Undecyl, Dodecyl, Tridecyl, Tetradecyl, Pentadecyl, Hexadecyl, Heptadecyl oder Octadecyl, ferner auch Nonadecyl oder Eicosyl.

Ein geradkettiges oder verzweigtes Alkenyl, bevorzugt mit 2 bis 10 C-Atomen, ist beispielsweise Allyl, 2- oder 3-Butenyl, Isobutenyl, sek.-Butenyl, ferner 4-Pentenyl, iso-Pentenyl, Hexenyl, Octenyl oder Decenyl.

Ein geradkettiges oder verzweigtes Alkinyl, bevorzugt mit 3 bis 10 C-Atomen, ist beispielsweise Propargyl, 2- oder 3-Butinyl, ferner 4-Pentinyl, Hexinyl, Octinyl oder Decinyl.

Cycloalkyl mit 3 bis 7 C-Atomen bedeutet unsubstituierte gesättigte oder teilweise ungesättigte Cycloalkylgruppen mit 3-7 C-Atomen, beispielsweise Cyclopropyl, Cyclobutyl, Cyclopentyl, Cyclohexyl, Cycloheptyl, Cyclopentenyl, Cyclohexenyl oder Cycloheptenyl, welche mit C₁- bis C₆-Alkylgruppen substituiert sein können.

Aryl steht beispielsweise für substituiertes oder unsubstituiertes Phenyl, Naphthyl oder Anthryl. Besonders bevorzugt steht Aryl für unsubstituiertes oder substituiertes Phenyl.

Substituiertes Phenyl bedeutet durch C₁- bis C₆-Alkyl, C₂- bis C₆-Alkenyl, NO₂, CN, F, Cl, Br, I, OH, nicht fluoriertes, teilweise fluoriertes oder perfluoriertes C₁-C₆-Alkoxy, SCF₃, SO₂CF₃, COOH, C(O)OR", C(O)X', C(O)NR"₂, C(O)H, C(O)R", SO₂X', SO₂NR"₂ oder SO₃H substituiertes Phenyl, wobei X' F, Cl oder Br und R" ein nicht, teilweise oder perfluoriertes C₁- bis C₆-Alkyl oder C₃- bis C₇-Cycloalkyl wie definiert bedeutet, beispielsweise, o-, m- oder p-Methylphenyl, o-, m- oder p-Ethylphenyl, o-, m- oder p-Propylphenyl, o-, m- oder p-iso-Propylphenyl, o-, m- oder p-tert.-Butylphenyl, o-, m- oder p-Nitrophenyl, o-, m- oder p-Hydroxyphenyl, o-, m-oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl. Ganz besonders bevorzugt ist Aryl unsubstituiertes Phenyl.

Nicht fluoriertes C₁-C₆ Alkoxy entspricht einer Alkoxygruppe der Formel OCₚH₂ₚ₊₁ mit p = 1, 2, 3, 4, 5 oder 6, beispielsweise Methoxy, Ethoxy, Propoxy, Butoxy, Pentoxy oder Hexoxy, wobei die Alkylgruppen der Alkoxygruppen geradkettig oder verzweigt sein können. Bei perfluorierten Alkoxygruppen sind entsprechend alle H-Atome der oben genannten Formel durch F ersetzt. Bei teilweise durch F substituierten Alkoxygruppen sind nur einige H durch F ersetzt.

Alkyl-Aryl bedeutet beispielsweise Benzyl, Phenylethyl, Phenylpropyl, Phenylbutyl, Phenylpentyl oder Phenylhexyl, besonders bevorzugt Benzyl. R⁰ steht für eine geradkettige oder verzweigte Alkylgruppe mit 1 bis 8 C-Atomen, beispielsweise Methyl, Ethyl, Propyl, n-Butyl, s-Butyl, tert-Butyl, Hexyl oder Octyl, besonders bevorzugt für Methyl oder Butyl.

Halogen bedeutet Cl, Br oder I, bevorzugt Cl oder Br.

In Formel I steht X bevorzugt für H, wenn n = 1 bedeutet, d.h. für eine Bis(perfluoralkyl)phosphinige Säure, wenn A = O bedeutet oder für eine Bis(perfluoralkyl)thiophosphinige Säure, wenn A = S bedeutet.

Derivate dieser phosphinigen Säure sind bevorzugt Verbindungen der Formel I, in denen X bevorzugt steht für eine geradkettige oder verzweigte Alkylgruppe mit 1 bis 4 C-Atomen, Phenyl, Benzyl, Trimethylsilyl oder Tributylstannyl, wenn n = 1 bedeutet.

Für A = S sind Verbindungen der Formel I bevorzugt, in denen X für H steht und n = 1 ist.

In Formel I steht X bevorzugt für H oder Halogen, wenn n = 0 ist. Dies gilt sowohl für Verbindungen der Formel I mit A = O oder S, insbesondere für Verbindungen der Formel I mit A = O.

In Formel II steht Y⁺ entweder für ein metallisches Kation, beispielsweise Ag⁺, Li⁺, Na⁺, K⁺, Rb⁺ oder Cs⁺ oder für ein organisches Kation der Gruppe Ammonium, Phosphonium, Tritylium, Guanidinium oder ein heterocyclisches Kation enthaltend mindestens ein Stickstoff- oder Phosphoratom, wenn n = 1 bedeutet.

Bei den metallischen Kationen steht Y⁺ bevorzugt für Ag⁺, Li⁺, Na⁺ oder K⁺, besonders bevorzugt Li⁺. Lithiumsalze sind insbesondere interessante Salze für elektrochemische Anwendungen, beispielsweise als Leitsalze in elektrochemischen Zellen.

Die Verbindungen der Formel II mit den organischen Kationen der Gruppe Ammonium, Phosphonium, Tritylium, Guanidinium oder ein heterocyclisches Kation enthaltend mindestens ein Stickstoff- oder Phosphoratom, wenn n = 1 bedeutet, werden insbesondere als ionische Flüssigkeiten verwendet.

Bevorzugt für Ammonium sind Ammoniumkationen der Formel (1),

[NR₄]⁺ (1),

wobei
R jeweils unabhängig voneinander
H, OR', NR'₂, mit der Maßgabe, dass maximal ein Substituent R in Formel (1) OR', NR'₂ ist,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes oder teilweise ungesättigtes Cycloalkyl mit 3-7 C-Atomen, das mit Alkylgruppen mit 1-6 C-Atomen substituiert sein kann,
Phenyl, das mit Alkylgruppen mit 1-6 C-Atomen substituiert sein kann, wobei ein oder mehrere R teilweise oder vollständig mit Halogenen, insbesondere -F und/oder -Cl, oder teilweise mit -OH, -OR', -CN, -C(O)OH, -C(O)NR'₂, -SO₂NR'₂, -C(O)X', -SO₂OH, -SO₂X', -NO₂, substituiert sein können, und wobei ein oder zwei nicht benachbarte und nicht α-ständige Kohlenstoffatome des R, durch Atome und/oder Atomgruppierungen ausgewählt aus der Gruppe -O-, -S-, -S(O)-, -SO₂-, -SO₂O-, -C(O)-,-C(O)O-, -N⁺R'₂-, -P(O)R'O-, -C(O)NR'-, -SO₂NR'-, -OP(O)R'O-, -P(O)(NR'₂)NR'-, -PR'₂=N- oder -P(O)R'- ersetzt sein können mit R' = H, nicht, teilweise oder perfluoriertes C₁- bis C₆-Alkyl, C₃- bis C₇-Cycloalkyl, das mit Alkylgruppen mit 1-6 C-Atomen substituiert sein kann, unsubstituiertes oder substituiertes Phenyl und X' =Halogen sein kann.

Bevorzugt für Phosphonium sind Phosphoniumkationen der Formel (2)

[PR³₄]⁺ (2),

wobei
R³ jeweils unabhängig voneinander
H, OR', NR'₂,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes oder teilweise ungesättigtes Cycloalkyl mit 3-7 C-Atomen, das mit Alkylgruppen mit 1-6 C-Atomen substituiert sein kann,
Phenyl, das mit Alkylgruppen mit 1-6 C-Atomen substituiert sein kann, wobei ein oder mehrere R³ teilweise oder vollständig mit Halogenen, insbesondere -F und/oder -Cl, oder teilweise mit -OH, -OR', -CN, -C(O)OH, -C(O)NR'₂, -SO₂NR'₂, -C(O)X', -SO₂OH, -SO₂X', -NO₂, substituiert sein können, und wobei ein oder zwei nicht benachbarte und nicht α-ständige Kohlenstoffatome des R³, durch Atome und/oder Atomgruppierungen ausgewählt aus der Gruppe -O-, -S-, -S(O)-, -SO₂-, -SO₂O-, -C(O)-,-C(O)O-, -N⁺R'₂-, -P(O)R'O-, -C(O)NR'-, -SO₂NR'-, -OP(O)R'O-, -P(O)(NR'₂)NR'-, -PR'₂=N- oder -P(O)R'- ersetzt sein können mit R' = H, nicht, teilweise oder perfluoriertes C₁- bis C₆-Alkyl, C₃- bis C₇-Cycloalkyl, das mit Alkylgruppen mit 1-6 C-Atomen substituiert sein kann, unsubstituiertes oder substituiertes Phenyl und X' =Halogen sein kann.

Bevorzugt für Guanidinium sind Guanidiniumkationen der Formel (3)

[C(NR⁸R⁹)(NR¹⁰R¹¹)(NR¹²R¹³)]⁺ (3),

wobei
R⁸ bis R¹³ jeweils unabhängig voneinander
H, -CN, NR'₂, -OR'
geradkettiges oder verzweigtes Alkyl mit 1 bis 20 C-Atomen, geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes oder teilweise ungesättigtes Cycloalkyl mit 3-7 C-Atomen, das mit Alkylgruppen mit 1-6 C-Atomen substituiert sein kann,
Phenyl, das mit Alkylgruppen mit 1-6 C-Atomen substituiert sein kann, bedeutet, wobei ein oder mehrere der Substituenten R⁸ bis R¹³ teilweise oder vollständig mit Halogenen, insbesondere -F und/oder -Cl, oder teilweise mit -OH, -OR', -CN, -C(O)OH, -C(O)NR'₂, -SO₂NR'₂, -C(O)X',-SO₂OH, -SO₂X', -NO₂, substituiert sein können, und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -SO₂O-, -C(O)-, -C(O)O-, -N⁺R'₂-, -P(O)R'O-, -C(O)NR'-, -SO₂NR'-, -OP(O)R'O-, -P(O)(NR'₂)NR'-, -PR'₂=N- oder-P(O)R'- ersetzt sein können mit R' = H, nicht, teilweise oder perfluoriertes C₁- bis C₆-Alkyl, C₃- bis C₇-Cycloalkyl, das mit Alkylgruppen mit 1-6 C-Atomen substituiert sein kann, unsubstituiertes oder substituiertes Phenyl und X' =Halogen.

Bevorzugt für ein heterocyclisches Kation enthaltend mindestens ein Stickstoffatom sind heterocyclische Kationen der Formel (4),

[HetN]⁺ (4),

wobei
- HetN⁺: ein heterocyclisches Kation, ausgewählt aus der Gruppe 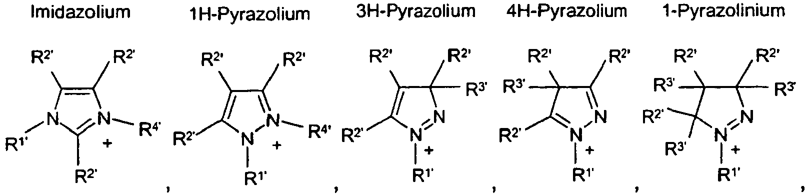 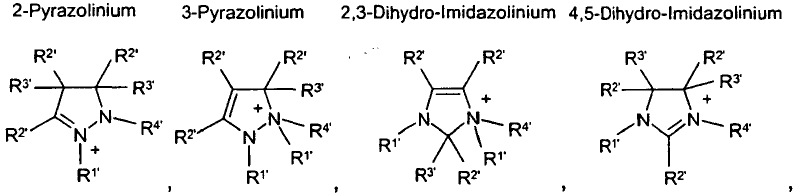 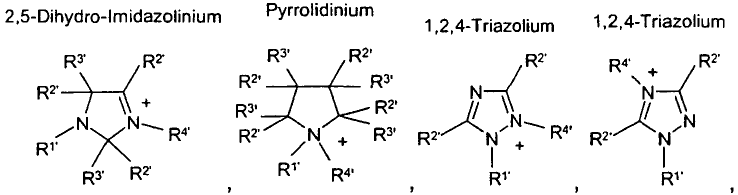 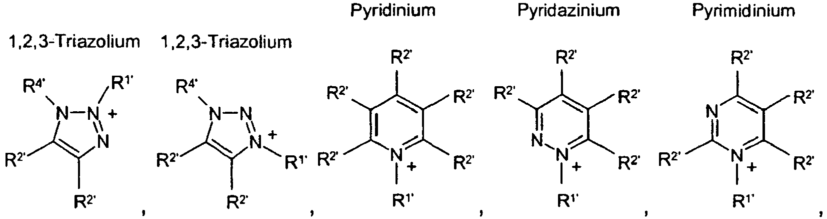 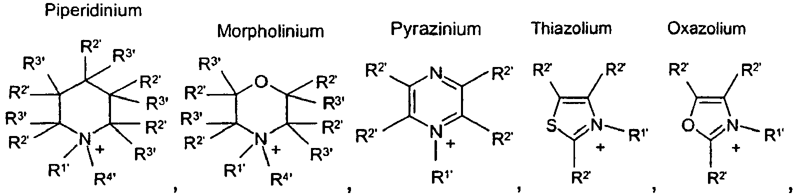 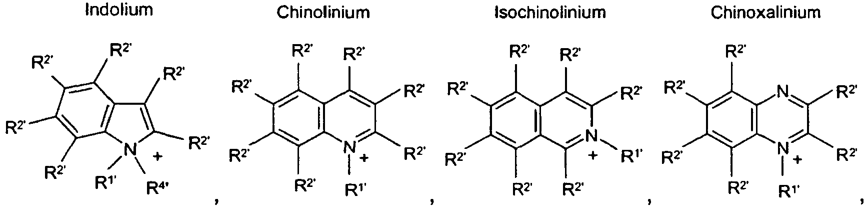 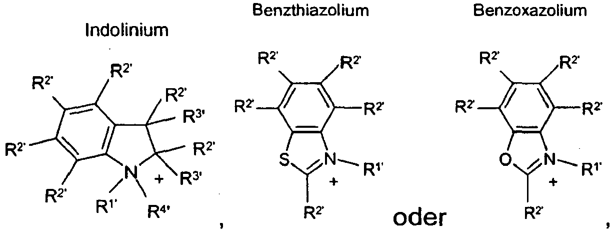
bedeutet, wobei die Substituenten
R^{1,} bis R^{4,} jeweils unabhängig voneinander
H, -CN, -OR', -NR'₂, -P(O)R'₂, -P(O)(OR')₂, -P(O)(NR'₂)₂, -C(O)R',-C(O)OR',
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes oder teilweise ungesättigtes Cycloalkyl mit 3-7 C-Atomen, das mit Alkylgruppen mit 1-6 C-Atomen substituiert sein kann,
Phenyl, das mit Alkylgruppen mit 1-6 C-Atomen substituiert sein kann, gesättigtes, teilweise oder vollständig ungesättigtes Heteroaryl, Heteroaryl-C₁-C₆-alkyl oder Aryl-C₁-C₆-alkyl bedeutet,
wobei die Substituenten R^{1'}, R^{2'} , R^{3'} und/oder R^{4'} zusammen auch ein Ringsystem bilden können,
wobei ein oder mehrere Substituenten R¹' bis R⁴' teilweise oder vollständig mit Halogenen, insbesondere -F und/oder -Cl, oder -OH, -OR', -CN, -C(O)OH, -C(O)NR'₂, -SO₂NR'₂, -C(O)X', -SO₂OH, -SO₂X', =NO₂, substituiert sein können, wobei jedoch nicht gleichzeitig R^{1'} und R^{4'} vollständig mit Halogenen substituiert sein dürfen, und wobei ein oder zwei nicht benachbarte und nicht am Heteroatom gebundene Kohlenstoffatome der Substituenten R¹' bis R⁴', durch Atome und/oder Atomgruppierungen ausgewählt aus der -O-, -S-, -S(O)-, -SO₂-, -SO₂O-, -C(O)-, -C(O)O-,-N⁺R'₂-, -P(O)R'O-, -C(O)NR'-, -SO₂NR'-, -OP(O)R'O-, -P(O)(NR'₂)NR'-,-PR'₂=N- oder -P(O)R'- ersetzt sein können mit R' = H, nicht, teilweise oder perfluoriertes C₁- bis C₆-Alkyl, C₃- bis C₇-Cycloalkyl, das mit Alkylgruppen mit 1-6 C-Atomen substituiert sein kann, unsubstituiertes oder substituiertes Phenyl und X' =Halogen.

Bevorzugt für ein heterocyclisches Kation enthaltend mindestens ein Phosphoratom sind heterocyclische Kationen der Formel (5),

[HetP]⁺ (5),

wobei
- HetP⁺: ein heterocyclisches Kation, ausgewählt aus der Gruppe 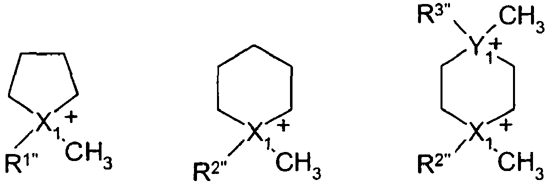 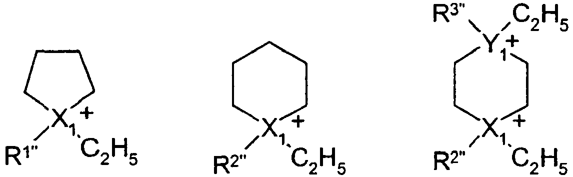 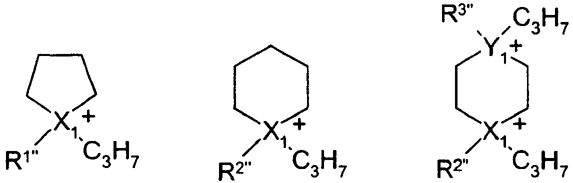
bedeutet, wobei
X₁ für P steht,
Y₁ für N oder P steht,
R^{1"}, R2^{"} und R^{3"} jeweils unabhängig voneinander die Bedeutung H, geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes oder teilweise ungesättigtes Cycloalkyl mit 3-7 C-Atomen, das mit Alkylgruppen mit 1-6 C-Atomen substituiert sein kann,
Phenyl, das mit Alkylgruppen mit 1-6 C-Atomen substituiert sein kann, gesättigtes, teilweise oder vollständig ungesättigtes Heteroaryl, Heteroaryl-C₁-Cₛ-alkyl oder Aryl-C₁-C₆-alkyl haben und wobei ein oder mehrere Substituenten R^{1"} bis R^{3"} teilweise oder vollständig mit Halogenen, insbesondere -F und/oder -Cl, substituiert sein können.

Unter vollständig ungesättigten Substituenten werden im Sinne der vorliegenden Erfindung auch aromatische Substituenten verstanden.

Als Substituenten R der Verbindungen der Formel (1) sind bevorzugt H, geradkettige oder verzweigte Alkylgruppe mit 1 bis 20 C-Atomen, insbesondere C₁- bis C₈-Alkylgruppen, gesättigte oder teilweise ungesättigte C₃- bis C₇-Cycloalkylgruppen, die mit C₁- bis C₆-Alkylgruppen substituiert sein können oder Phenyl, das mit C₁- bis C₆-Alkylgruppen substituiert sein kann, insbesondere unsubstituiertes Phenyl. R steht ganz besonders bevorzugt für geradkettige oder verzweigte Alkylgruppen mit 1 bis 4 C-Atomen.

Die Substituenten R in Formel (1) können gleich oder verschieden sein. Insbesondere bevorzugt sind Verbindungen, bei denen drei Substituenten R gleich sind und ein Substituent R verschieden ist oder bei denen alle vier Substituenten gleich sind. Ganz besonders bevorzugt sind drei Substituenten R gleich und ein Substituent R ist verschieden.

Als Substituenten R³ der Verbindungen der Formel (2) sind bevorzugt H, geradkettige oder verzweigte Alkylgruppe mit 1 bis 20 C-Atomen, insbesondere C₁- bis C₈-Alkylgruppen, gesättigte oder teilweise ungesättigte, C₃- bis C₇-Cycloalkylgruppen, die mit C₁- bis C₆-Alkylgruppen substituiert sein können, insbesondere Cyclohexyl, oder Phenyl, das mit C₁- bis C₆-Alkylgruppen substituiert sein kann, insbesondere unsubstituiertes Phenyl. R³ steht ganz besonders bevorzugt für geradkettige oder verzweigte Alkylgruppen mit 1 bis 4 C-Atomen.

Die Substituenten R³ in Formel (1) können gleich oder verschieden sein. Insbesondere bevorzugt sind Verbindungen, bei denen drei Substituenten R³ gleich sind und ein Substituent R³ verschieden ist oder bei denen alle vier Substituenten gleich sind. Ganz besonders bevorzugt sind drei Substituenten R³ gleich und ein Substituent R³ ist verschieden.

Die Substituenten R und R³ sind insbesondere jeweils unabhängig voneinander bevorzugt Methyl, Ethyl, iso-Propyl, Propyl, Butyl, i-Butyl, tert.-Butyl, Pentyl, Hexyl, Octyl, Decyl oder Tetradecyl.

Als Substituenten R⁸ bis R¹³ der Verbindungen der Formel (3) sind jeweils unabhängig voneinander bevorzugt H, geradkettige oder verzweigte Alkylgruppe mit 1 bis 20 C-Atomen, insbesondere C₁- bis C₄-Alkylgruppen, und gesättigte oder ungesättigte, d.h. auch aromatische, C₃- bis C₇-Cycloalkylgruppen, die mit C₁- bis C₆-Alkylgruppen substituiert sein können, insbesondere Phenyl.

Bis zu vier Substituenten des Guanidiniumkations der Formel (3) können auch paarweise derart verbunden sein, dass mono-, bi- oder polycyclische Kationen entstehen.

Ohne Einschränkung der Allgemeinheit sind Beispiele für solche Guanidinium-Kationen: 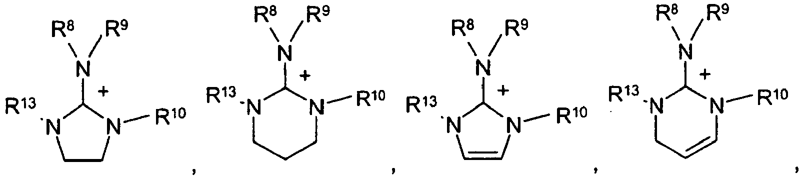 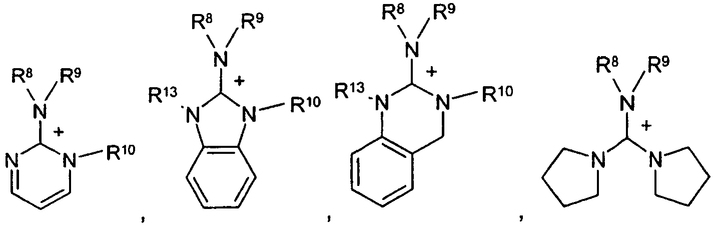 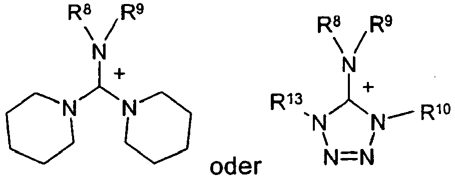 wobei die Substituenten R⁸ bis R¹⁰ und R¹³ eine zuvor angegebene oder besonders bevorzugte Bedeutung haben können.

Gegebenenfalls können die Carbocyclen oder Heterocyclen der zuvor angegebenen Guanidinium-Kationen noch durch C₁- bis C₆-Alkyl, C₁- bis C₆-Alkenyl, NO₂, CN, F, Cl, Br, I, OH, C₁-C₆-Alkoxy, SCF₃, SO₂CF₃, C(O)OH, C(O)OR', SO₂NR'₂, SO₂X' oder SO₃H substituiert sein, wobei X und R' eine zuvor angegebene Bedeutung haben, substituiertes oder unsubstituiertes Phenyl oder unsubstituierter oder substituierter Heterocyclus substituiert sein.

Die Substituenten R⁸ und R⁹, R¹⁰ und R¹¹ und R¹² und R¹³ in Verbindungen der Formeln für Guanidiniumkationen wie zuvor beschrieben können dabei gleich oder verschieden sein. Besonders bevorzugt sind R⁸ bis R¹³ jeweils unabhängig voneinander Methyl, Ethyl, n-Propyl, iso-Propyl, n-Butyl, tert.-Butyl, i-Butyl, Phenyl oder Cyclohexyl, ganz besonders bevorzugt Methyl, Ethyl, n-Propyl, iso-Propyl oder n-Butyl.

Als Substituenten R^{1'} bis R^{4'} von Verbindungen der Formel (4) kommen erfindungsgemäß dabei neben H bevorzugt in Frage: C₁- bis C₂₀, insbesondere C₁- bis C₁₂-Alkylgruppen, und gesättigte oder teilweise ungesättigte C₃- bis C₇-Cycloalkylgruppen, die mit C₁- bis C₆-Alkylgruppen substituiert sein können, bevorzugt Cyclohexyl, oder Phenyl, das mit C₁- bis C₆-Alkylgruppen substituiert sein kann.

Die Substituenten R^{1'} und R^{4'} sind jeweils unabhängig voneinander insbesondere bevorzugt Methyl, Ethyl, iso-Propyl, Propyl, Butyl, i-Butyl, tert.-Butyl, Pentyl, Hexyl, Octyl, Decyl, Cyclohexyl, Phenyl oder Benzyl. Sie sind ganz besonders bevorzugt Methyl, Ethyl, n-Butyl oder n-Hexyl. In Pyrrolidinium-, Piperidinium- oder Indolinium-Verbindungen sind die beiden Substituenten R^{1'} und R^{4'} bevorzugt unterschiedlich.

Der Substituent R^{2'} oder R^{3'} ist jeweils unabhängig voneinander insbesondere H, Methyl, Ethyl, iso-Propyl, Propyl. Butyl, i-Butyl, tert.-Butyl, Cyclohexyl, Phenyl oder Benzyl. Besonders bevorzugt ist R^{2'} H, Methyl, Ethyl, iso-Propyl, Propyl, Butyl oder i-Butyl. Ganz besonders bevorzugt sind R^{2'} und R^{3'} H.

Als Substituenten R^{1"} bis R^{3"} von Verbindungen der Formel (5) kommen dabei neben H bevorzugt in Frage: C₁- bis C₂₀, insbesondere C₁- bis C₁₂-Alkylgruppen, und gesättigte oder teilweise ungesättigte C₃- bis C₇-Cycloalkylgruppen, die mit C₁- bis C₆-Alkylgruppen substituiert sein können oder Phenyl, das mit C₁- bis C₆-Alkylgruppen substituiert sein kann.

Besonders bevorzugt ist R^{1"} Methyl, Ethyl, iso-Propyl, n-Propyl, n-Butyl, oder i-Butyl.

Besonders bevorzugt ist R^{2"} Methyl, Ethyl, iso-Propyl, n-Propyl, n-Butyl oder i-Butyl.

Besonders bevorzugt ist R^{3"} Methyl, Ethyl, iso-Propyl, n-Propyl, n-Butyl oder i-Butyl.

Ein geradkettiges oder verzweigtes Alkinyl mit 2 bis 20 C-Atomen, wobei auch mehrere Doppelbindungen vorhanden sein können, ist beispielsweise Ethenyl, Allyl, 2- oder 3-Butenyl, Isobutenyl, 1sek.-Butenyl, ferner 4-Pentenyl, iso-Pentenyl, Hexenyl, Heptenyl, Octenal, -C₉H₁₇, -C₁₀H₁₉ bis - C₂₀H₃₉; vorzugsweise Allyl, 2- oder 3-Butenyl, isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Aryl-C₁-C₆-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit Halogenen, insbesondere -F und/oder -Cl, oder teilweise mit -OH, -OR', -CN, -C(O)OH, -C(O)NR'₂, -SO₂NR'₂, -C(O)X, -SO₂OH, -SO₂X, -NO₂ substituiert sein können. R' und X haben die zuvor angegebenen Bedeutungen.

Unsubstituierte gesättigte oder teilweise ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclopenta-1,3-dienyl, Cyclohexenyl, Cyclohexa-1,3-dienyl, Cyclohexa-1,4-dienyl, Cycloheptenyl, Cyclohepta-1,3-dienyl, Cyclohepta-1,4-dienyl oder Cyclohepta-1,5-dienyl, welche mit C₁- bis C₆-Alkylgruppen substituiert sein können.

In den Substituenten R, R³, R⁸ bis R¹³ oder R^{1'} bis R^{4'} können auch ein oder zwei nicht benachbarte und nicht α-ständig zum Heteroatom gebundene Kohlenstoffatome, durch Atome und/oder Atomgruppierungen ausgewählt aus der Gruppe -O-, -S-, -S(O)-, -SO₂-, -SO₂O-, -C(O)-, -C(O)O-, -N⁺R'₂-, - P(O)R'O-, -C(O)NR'-, -SO₂NR'-, -OP(O)R'O-, -P(O)(NR'₂)NR'-, -PR'₂=N-oder -P(O)R'- ersetzt werden, mit R' = nicht, teilweise oder perfluoriertes C₁- bis C₆-Alkyl, C₃- bis C₇-Cycloalkyl, welches mit C₁- bis C₆-Alkylgruppen substituiert sein kann, unsubstituiertes oder substituiertes Phenyl.

Ohne Einschränkung der Allgemeinheit sind Beispiele für derart modifizierte Substituenten R, R³, R⁸ bis R¹³ und R^{1'} bis R⁴':
-OCH₃, -OCH(CH₃)₂, -CH₂OCH₃, -CH₂-CH₂-O-CH₃, -C₂H₄OCH(CH₃)₂, C₂H₄SC₂H₅, -C₂H₄SCH(CH₃)₂, -S(O)CH₃, -SO₂CH₃, -SO₂C₆H₅, -SO₂C₃H₇, - SO₂CH(CH₃)₂, -SO₂CH₂CF₃, -CH₂SO₂CH₃, -O-C₄H₈-O-C₄H₉, -CF₃, -C₂F₅, - C₃F₇, -C₄F₉, -C(CF₃)₃, -CF₂SO₂CF₃, -C₂F₄N(C₂F₅)C₂F₅, -CHF₂, -CH₂CF₃, - C₂F₂H₃, -C₃FH₆, -CH₂C₃F₇, -C(CFH₂)₃, -CH₂C(O)OH, -CH₂C₆H₅, -C(O)C₆H₅ oder P(O)(C₂H₅)₂.

In R' ist C₃- bis C₇-Cycloalkyl beispielsweise bevorzugt Cyclopropyl, Cyclobutyl, Cyclopentyl, Cyclohexyl oder Cycloheptyl.

In R' bedeutet substituiertes Phenyl, durch nicht fluoriertes, teilweise fluoriertes oder perfluoriertes C₁- bis C₆-Alkyl, C₂- bis C₆-Alkenyl, NO₂, CN, F, Cl, Br, l, OH, nicht fluoriertes, teilweise fluoriertes oder perfluoriertes C₁-C₆-Alkoxy, SCF₃, SO₂CF₃, COOH, SO₂X', SO₂NR"₂ oder SO₃H substituiertes Phenyl, wobei X' F, Cl oder Br und R" ein nicht, teilweise oder perfluoriertes C₁- bis C₆-Alkyl oder C₃- bis C₇-Cycloalkyl wie für R' definiert bedeutet, beispielsweise, o-, m- oder p-Methylphenyl, o-, m- oder p-Ethylphenyl, o-, m- oder p-Propylphenyl, o-, m- oder p-iso-Propylphenyl, o-, m- oder p-tert.-Butylphenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-lodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

in R^{1'} bis R^{4'} oder R^{1"} bis R^{3"} wird als Heteroaryl ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder 0-Atome vorliegen können und der heterocyclische Rest ein- oder mehrfach durch C₁- bis C₆-Alkyl, C₁- bis C₆-Alkenyl, NO₂, CN, F, Cl, Br, I, OH, C₁-C₆-Alkoxy, SCF₃, SO₂CF₃, COOH, SO₂X', SO₂NR"₂ oder SO₃H substituiert sein kann, wobei X' und R" eine zuvor angegebene Bedeutung haben. Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3-oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4-oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Unter Heteroaryl-C₁-C₆-alkyl wird nun in Analogie zu Aryl-C₁-C₆-alkyl beispielsweise Pyridinyl-methyl, Pyridinyl-ethyl, Pyridinyl-propyl, Pyridinyl-butyl, Pyridinyl-pentyl, Pyridinyl-hexyl verstanden, wobei weiterhin die zuvor beschriebenen Heterocyclen in dieser Weise mit der Alkylenkette verknüpft werden können.

HetN⁺ ist bevorzugt 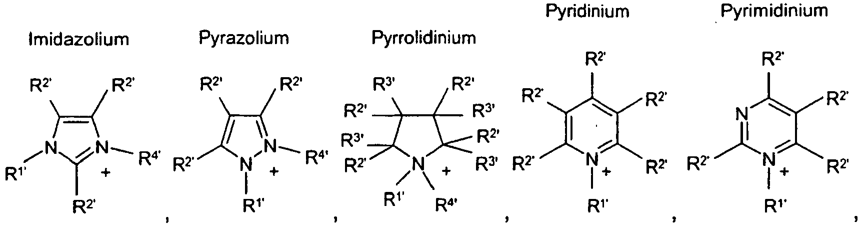 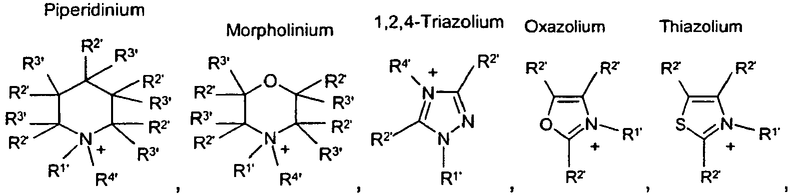 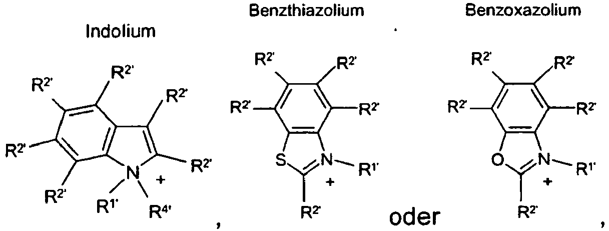 wobei die Substituenten R^{1'} bis R^{4'} jeweils unabhängig voneinander eine zuvor beschriebene Bedeutung haben.

HetN⁺ ist besonders bevorzugt Imidazolium, Pyrrolidinium, Morpholinium oder Pyridinium, wie zuvor definiert, wobei die Substituenten R^{1'} bis R^{4'} jeweils unabhängig voneinander eine zuvor beschriebene Bedeutung haben. HetN⁺ ist ganz besonders bevorzugt Imidazolium oder Pyrrolidinium, wobei die Substituenten R^{1'} bis R^{4'} jeweils unabhängig voneinander eine zuvor beschriebene Bedeutung haben.

HetP⁺ ist besonders bevorzugt

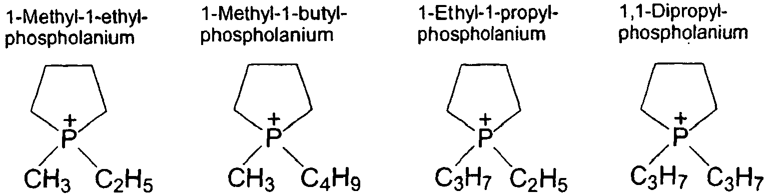

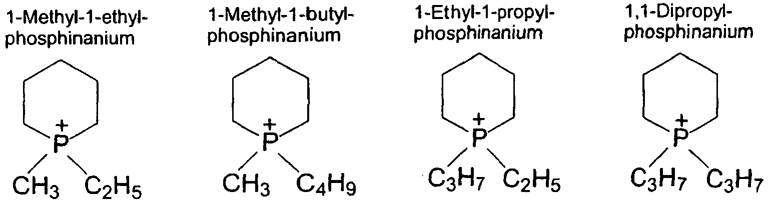

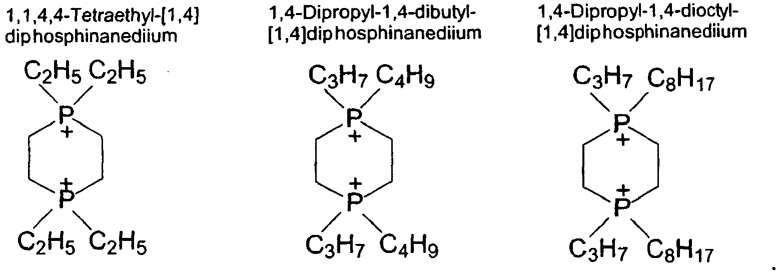

Bevorzugte Verbindungen sind
1-Methyl-3-methylimidazolium [(C₂F₅)₂PO]⁻,
1-Ethyl-3-methylimidazolium [(C₂F₅)PO]⁻,
1-Propyl-3-methylimidazolium [(C₂F₅)₂PO]⁻,
1-Butyl-3-methylimidazolium [(C₂F₅)₂PO]⁻,
1-Hexyl-3-methylimidazolium [(C₂F₅)₂PO]⁻,
1-Octyl-3-methylimidazolium [(C₂F₅)₂PO]⁻,
1-(2-Hydroxyethyl)-3-methylimidazolium [(C₂F₅)₂PO]⁻,
1-Methyl-2,3-dimethylimidazolium [(C₂F₅)₂PO]⁻,
1-Ethyl-2,3-dimethylimidazolium [(C₂F₅)₂PO]⁻,
1-Propyl-2,3-dimethylimidazolium [(C₂F₅)₂PO]⁻,
1-Butyl-2,3-dimethylimidazolium [(C₂F₅)₂PO]⁻,
N-Butyl-pyridinium [(C₂F₅)₂PO]⁻,
N-Ethyl-3-methylpyridinium [(C₂F₅)₂PO]⁻,
N-Butyl-3-methylpyridinium [(C₂F₅)₂PO]⁻,
N-(3-Hydroxypropyl)pyridinium [(C₂F₅)₂PO]⁻,
N-Hexyl-4-(dimethylamino)pyridinium [(C₂F₅)₂PO]⁻,
N-Ethyl-3-hydroxymethylpyridinium [(C₂F₅)₂PO]⁻,
N,N-Dimethylpyrrolidinium [(C₂F₅)₂PO]⁻,
N-Butyl-N-methylpyrrolidinium [(C₂F₅)₂PO]⁻,
N-(2-Methoxyethyl)-N-methylpyrrolidinium [(C₂F₅)₂PO]⁻,
Tetramethylammonium [(C₂F₅)₂PO]⁻,
Tetrabutylammonium [(C₂F₅)₂PO]⁻,
Ethyl-dimethyl-propylammonium [(C₂F₅)₂PO]⁻,
Trihexyl(tetradecyl)phosphonium [(C₂F₅)₂PO]⁻,
N-(Methoxyethyl)-N-methylmorpholinium [(C₂F₅)₂PO]⁻,
1-Methyl-3-methylimidazolium [(C₂F₅)₂PS]⁻,
1-Ethyl-3-methylimidazolium [(C₂F₅)₂PS]⁻,
1-Propyl-3-methylimidazolium [(C₂F₅)₂PO]⁻,
1-Butyl-3-methylimidazolium [(C₂F₅)₂PS]⁻,
1-Hexyl-3-methylimidazolium [(C₂F₅)₂PS]⁻,
1-Octyl-3-methylimidazolium [(C₂F₅)₂PS]⁻,
1-Methyl-3-methylimidazolium [(C₂F₉)₂PO]⁻,
1-Ethyl-3-methylimidazolium [(C₄F₉)₂PO]⁻,
1-Propyl-3-methylimidazolium [(C₄F₉)₂PO]⁻,
1-Butyl-3-methylimidazolium [(C₄F₉)₂PO]⁻,
1-Hexyl-3-methylimidazolium [(C₂F₉)₂PO]⁻,
1-Octyl-3-methylimidazolium [(C₄F₉)₂PO]⁻,
1-(2-Hydroxyethyl)-3-methylimidazolium [(C₄F₉)₂PO]⁻,
1-Methyl-2,3-dimethylimidazolium [(C₄F₉)₂PO]⁻,
1-Ethyl-2,3-dimethylimidazolium [(C₄F₉)₂PO]⁻,
1-Propyl-2,3-dimethylimidazolium [(C₄F₉)₂PO]⁻,
1-Butyl-2,3-dimethylimidazolium [(C₄F₉)₂PO]⁻,
N-Butyl-pyridinium [(C₂F₉)₂PO]⁻,
N-Ethyl-3-methylpyridiniu [(C₂F₉)₂PO]⁻,
N-Butyl-3-methylpyridinium [(C₂F₉)₂PO]⁻,
N-(3-Hydroxypropyl)pyridinium [(C₂F₉)₂PO]⁻,
N-Hexyl-4-(dimethylamino)pyridinium [(C₂F₉)₂PO]⁻,
N-Ethyl-3-hydroxymethylpyridinium [(C₂F₉)₂PO]⁻,
N,N-Dimethylpyrrolidinium [(C₂F₉)₂PO]⁻,
N-Butyl-N-methylpyrrolidinium [(C₂F₉)₂PO]⁻,
N-(2-Methoxyethyl)-N-methylpyrrolidinium [(C₂F₉)₂PO]⁻_{.}

Besondere Kombinationen an Merkmalen sind auch in den Patentansprüchen offenbart.

Die Herstellung der Verbindungen der Formel I mit A = O, X = H und n = 1 sowie von Salzen der Formel II mit Y⁺ = Ag⁺, Li⁺, Na⁺, K⁺, Rb⁺, Cs⁺ oder [NR₄]⁺ und n = 1, gelingt durch ein Verfahren dadurch gekennzeichnet, dass ein Tris(perfluoralkyl)phosphin der Formel R¹R²R^{F}P mit einer anorganischen oder organischen Base umgesetzt wird und das erhaltene Salz der Formel II mit einer Brsønsted-Säure zur Bis(perfluoralkyl)phosphinigen Säure der Formel 1 umgesetzt wird, wobei R¹, R² eine zuvor angegebene Bedeutung haben oder eine der zuvor beschriebenen Bedeutungen haben und R^{F} für eine geradkettige oder verzweigte Perfluoralkylgruppe mit 1 bis 12 C-Atomen steht oder eine bevorzugte Bedeutung wie R¹ oder R² hat.

Bevorzugt wird das Tris(perfluoralkyl)phosphin der Formel R¹R²R^{F}P alkalisch hydrolysiert.

Die alkalische Hydrolyse findet in Gegenwart einer wässrigen Lösung einer Base, insbesondere von NaOH, KOH oder NH₄OH statt, in einem organische Lösungsmittel, vorzugsweise in Diethylether, und anschließender Umsetzung mit einer Brønsted-Säure, vorzugsweise mit HBr. Die Umsetzung erfolgt vorzugsweise bei Raumtemperatur.

Tris(perfluoralkyl)phosphine der Formel R¹R²R^{F}P können beispielsweise durch Reduktion von Tris(perfluoralkyl)difluorphosphoranen [(R¹R²R^{F})PF₂] synthetisiert werden, wie beispielsweise in WO 03/087113, Merck Patent GmbH, beschrieben.

Verbindungen der Formel I mit A = O, X = H und n = 1 sowie der Salze der Formel II, wie zuvor beschrieben, können hergestellt werden, indem ein Bis(perfluoralkyl)phosphinsäurechlorid der Formel R¹R²P(=O)Cl mit Trialkylzinnhydrid und anschließend mit einer Brønsted-Säure umgesetzt wird und die erhaltene

Bis(perfluoralkyl)phosphinige Säure R¹R²POH mit einer Base ausgewählt aus Me₂O, MeCN, MeOC(O)R'" oder Me₂CO₃ oder einem Salz KtZ zum Salz der Formel II umgesetzt wird, wobei Me ausgewählt wird aus Ag, Li, Na, K, Rb oder Cs, Kt ausgewählt wird aus Ammonium, Phosphonium, Tritylium, Guanidinium oder einem heterocyclischen Kation enthaltend mindestens ein Stickstoff- oder Phosphoratom, wie zuvor beschrieben, R"' einer Alkylgruppe mit 1 bis 6 C-Atomen oder Aryl entspricht, wobei Aryl wie zuvor definiert ist und Z einem Anion entspricht.

Die Synthese des Bis(perfluoralkyl)phosphinsäurechlorids R¹R²P(=O)Cl mit Substituenten, wie zuvor beschrieben, ist beispielsweise möglich durch Umsetzung der entsprechenden Phosphinsäure mit PCl₅, wie beispielsweise in L.M. Yagupolskii, N.V. Pavlenko, N.V. Ignatiev, G.I. Matuschecheva , V.Ya. Semenii, Zh. Obsh. Khim. (Russ.), 54 (1984), 2, 334-339 beschrieben.

Bevorzugt verwendet wird eine Brønsted-Säure aus der Gruppe HCl, HBr oder R"'SO₃H verwendet, wobei R"' einer Alkylgruppe mit 1 bis 6 C-Atomen oder Aryl entspricht, insbesondere bevorzugt wird HBr verwendet.

Bevorzugt wird ein Trialkylzinnhydrid (R"')₃SnH verwendet, wobei R'" einer Alkylgruppe mit 1 bis 6 C-Atomen oder Aryl entspricht, wobei Aryl wie zuvor definiert ist, beispielsweise Trimethylzinnhydrid, Triethylzinnhydrid, Tripropylzinnhydrid, Tributylzinnhydrid, Trihexylzinnhydrid, Triphenylzinnhydrid. Insbesondere bevorzugt wird Tributylzinnhydrid verwendet.

Es können jedoch in dieser Reaktion anstelle des Trialkylzinnhydrid alternativ auch Zinnhydride der Formel (R"')₂SnH₂ verwendet werden, wobei R'" jeweils unabhängig voneinander einer Alkylgruppe mit 1 bis 6 C-Atomen oder Aryl entspricht, wobei Aryl wie zuvor definiert ist.

Die Umsetzung der Verbindung der Formel I* R¹R²POH zu einem Salz der Formel II, wie zuvor beschrieben, kann nun zum Erhalt der Salze mit anorganischen Kationen bevorzugt in Gegenwart einer Base Me₂O, MeCN, MeOC(O)R"' oder Me₂CO₃ umgesetzt werden, wobei Me ausgewählt wird aus Ag, Li, Na, K, Rb oder Cs und R"' einer Alkylgruppe mit 1 bis 6 C-Atomen oder Aryl entspricht, wobei Aryl wie zuvor definiert ist. Bevorzugt wird Me ausgewählt aus Ag, Li, Na oder K.

Die Umsetzung erfolgt beispielsweise in einem organischen Lösungsmittel mit einem Überschuss an Base oder Säure R¹R²POH, vorzugsweise mit einem Äquivalent an Base.

Geeignete Lösungsmittel sind 1,2-Dimethoxyethan, Diethylether, Dichlormethan, Chloroform, Acetonitril, Tetrahydrofuran, Toluol oder Gemische der genannten Lösungsmittel. Bevorzugt wird Diethylether eingesetzt.

Die Reaktion findet bevorzugt bei Raumtemperatur statt.

Die Umsetzung der Verbindungen der Formel I** R¹R²PSH zu einem Salz der Formel II, wie zuvor beschrieben, kann analog wie zuvor beschrieben durchgeführt werden.

Die Umsetzung der Verbindung der Formel I* R¹R²POH zu einem Salz der Formel II, wie zuvor beschrieben, kann nun zum Erhalt der Salze mit organischen Kationen bevorzugt in Gegenwart eines Salzes KtZ umgesetzt werden, wobei Kt ausgewählt wird aus Ammonium, Phosphonium, Tritylium, Guanidinium oder einem heterocyclischen Kation enthaltend mindestens ein Stickstoff- oder Phosphoratom, wie zuvor beschrieben, und Z einem Anion entspricht.

Die Umsetzung erfolgt beispielsweise in einem organischen Lösungsmittel mit einem Überschuss an Salz oder Säure R¹R²POH, vorzugsweise mit äquivalenten Mengen der Reagenzien.

Geeignete Lösungsmittel sind 1,2-Dimethoxyethan, Diethylether, Dichlormethan, Chloroform, Acetonitril, Tetrahydrofuran oder Gemische der genannten Lösungsmittel. Bevorzugt wird Diethylether oder Acetonitril eingesetzt.

Die Reaktion findet bevorzugt bei Raumtemperatur statt.

Es ist jedoch alternativ auch möglich, die Salze der Formel II mit organischen Kationen, wie zuvor beschrieben, aus den Salzen der Formel II mit anorganischen Kationen herzustellen.

Verbindungen der Formel II, wie zuvor beschrieben, wobei n =1 1 und Y⁺ steht für Ammonium, Phosphonium, Tritylium, Guanidinium oder einem heterocyclischen Kation enthaltend mindestens ein Stickstoff- oder Phosphoratom können hergestellt werden, indem ein Salz der Formel II mit n = 1 und Y⁺ steht für Ag⁺, Li⁺, Na⁺, K⁺, Rb⁺ oder Cs⁺ mit einem Salz KtZ umgesetzt wird, wobei Kt ausgewählt wird aus Ammonium, Phosphonium, Tritylium, Guanidinium oder einem heterocyclischen Kation enthaltend mindestens ein Stickstoff oder Phosphoratom, und Z einem Anion entspricht.

Die Umsetzung erfolgt beispielsweise in einem organischen Lösungsmittel. Geeignete Lösungsmittel sind 1,2-Dimethoxyethan, Diethylether, Acetonitril Dichlormethan oder Gemische der genannten Lösungsmittel. Bevorzugt wird Diethylether, Acetonitril oder Dichlormethan eingesetzt.

Die Reaktion findet bevorzugt bei -30°C bis Raumtemperatur statt, besonders bevorzugt bei Raumtemperatur.

Bevorzugt wird das Anion Z ausgewählt aus Cl⁻, Br⁻, R⁰COO⁻, CF₃COO⁻, [BF₄]⁻. [PF₆]⁻ oder R"SO₃⁻, wobei R⁰ eine zuvor angegebene Bedeutung hat und R" eine geradkettige oder verzweigte Alkylgruppe mit 1 bis 6 C-Atomen oder eine Cycloalkylgrupe mit 3 bis 7 C-Atomen bedeutet, die nicht fluoriert, teilweise fluoriert oder perfluoriert ist oder unsubstituiertes oder substituiertes Phenyl bedeutet.

Es gelten die Definitionen der Alkylgruppen, Cycloalkylgruppen und von substituiertem Phenyl, wie zuvor beschrieben.

Ganz besonders bevorzugt werden die Anionen Cl⁻, CH₃C(O)O⁻, CF₃SO₃⁻, [BF₄]⁻ und [PF₆]⁻ verwendet

Verbindungen der Formel I mit A = O, X = Cl und n = 0 können hergestellt werden, indem ein Bis(perfluoralkyl)phosphinsäurechlorid der Formel R¹R²P(=O)Cl mit Trialkylzinnhydrid und anschließend mit Aryltetrachlorphosphoran umgesetzt wird und wobei R¹ und R² eine zuvor beschriebene Bedeutung haben.

Die Synthese des Bis(perfluoralkyl)Phosphinsäurechlorids R¹R²P(=O)Cl mit Substituenten, wie zuvor beschrieben, wurde zuvor beschrieben.

Bevorzugt wird ein Trialkylzinnhydrid (R'")₃SnH verwendet, wobei R'" einer Alkylgruppe mit 1 bis 6 C-Atomen oder Aryl entspricht, wobei Aryl wie zuvor definiert ist, beispielsweise Trimethylzinnhydrid, Triethylzinnhydrid, Tripropylzinnhydrid, Tributylzinnhydrid, Trihexylzinnhydrid, Triphenylzinnhydrid. Insbesondere bevorzugt wird Tributylzinnhydrid verwendet.

Es können jedoch in dieser Reaktion anstelle des Trialkylzinnhydrid alternativ auch Zinnhydride der Formel (R"')₂SnH₂ verwendet werden, wobei R"' jeweils unabhängig voneinander einer Alkylgruppe mit 1 bis 6 CAtomen oder Aryl entspricht, wobei Aryl wie zuvor definiert ist.

Aryltetrachlorphosphoran wird beispielsweise ausgewählt aus Phenyltetrachlorphosphoran, Tolyltetrachlorphosphoran, 1,2-Phenylenphosphortrichloridit. Insbesondere wird Phenyltetrachlorphosphoran verwendet.

Die Umsetzung erfolgt beispielsweise in 1,6-Dibromhexan mit einem Überschuss an Aryltetrachlorphosphoran.

Die Reaktion findet bevorzugt bei Raumtemperatur statt.

Verbindungen der Formel I mit A = O, X = Cl und n = 0 können hergestellt werden, indem man ein Tris(perfluoralkyl)phosphin der Formel R¹R²R^{F}P mit einer anorganischen oder organischen Base und anschließend mit einem Chlorierungsmittel umsetzt und wobei R¹, R² eine zuvor angegebene Bedeutung haben und R^{F} eine geradkettige oder verzweigte Perfluoralkylgruppe mit 1 bis 12 C-Atomen bedeutet.

Tris(perfluoralkyl)phosphine der Formel R¹R²R^{F}P können beispielsweise durch Reduktion von Tris(perfluoralkyl)difluorphosphoranen [(R¹R²R^{F})PF₂] synthetisiert werden, wie beispielsweise in WO 03/087113, Merck Patent GmbH, beschrieben.

Die anorganische Base ist beispielsweise MeOH, Me₂O oder Me₂CO₃, umgesetzt werden, wobei Me ausgewählt wird aus Ag, Li, Na, K, Rb oder Cs. Bevorzugt wird Me ausgewählt aus Li, Na oder K.

Die organische Base ist beispielsweise [NR₄]OH, wobei R eine der zuvor für die Formel (1) angegebenen Bedeutung hat.

Das Chlorierungsmittel ist beispielsweise SOCl₂, SO₂Cl₂, C(O)ClC(O)Cl, PCl₃, PCl₅, oder PhPCl₄. Besonders bevorzugt wird PhPCl₄ verwendet. Ph bedeutet Phenyl.

Die Umsetzung mit einer Base erfolgt beispielsweise in einem organischen Lösungsmittel mit einem Überschuss an Base. Für die Chlorierungsreaktion geeignete Lösungsmittel sind 9,2-Dimethoxyethan, Diglyme, Triglyme, 1,2-Dibromhexan oder Gemische der genannten Lösungsmittel. Bevorzugt wird Diglyme oder 1,2-Dibromhexan eingesetzt.

Die Reaktion findet bevorzugt bei -20°C bis Raumtemperatur statt, besonders bevorzugt bei 0°C.

Verbindungen der Formel I mit A = S, X = H und n = 1 können hergestellt werden, indem ein Bis(perfluoralkyl)phosphinigsäurechlolid der Formel R¹R²PCl mit einem Sulfid der Formel K'₂S umgesetzt wird, wobei K' Li, Na, K, Rb, Cs oder [NH₄] bedeutet und wobei R¹, R² eine zuvor angegebene Bedeutung haben.

Die Synthese der Bis(perfluoralicyl)phosphinigsäurechioride erfolgt wie zuvor beschrieben.

Sulfide der Formel K'₂S sind kommerziell erhältlich oder nach bekannten Methoden herstellbar, wobei K' eine genannte Bedeutung hat. Besonders bevorzugt wird Na₂S oder K₂S, ganz besonders bevorzugt wird Na₂S verwendet.

Die Umsetzung erfolgt beispielsweise in einem organischen Lösungsmittel. Geeignete Lösungsmittel sind 1,2-Dimethoxyethan, Diethylether, Acetonitril Dichlormethan oder Gemische der genannten Lösungsmittel. Bevorzugt wird Diethylether, Acetonitril oder Dichlormethan eingesetzt, ganz besonders bevorzugt wird Dichlormethan eingesetzt.

Die Reaktion findet bevorzugt bei -30°C bis Raumtemperatur statt, besonders bevorzugt bei Raumtemperatur.

Der Gegenstand der Erfindung sind Übergangsmetallkomplexe enthaltend mindestens eine Verbindung der Formel I nach Anspruch 1 . Bevorzugt werden Verbindungen der Formel I mit A = O eingesetzt, d.h. es werden bevorzugt Metall-P- und Metall-O-Bindungen oder Metall-P- oder Metall-O-Bindungen gebildet. Die Stellung der Verbindung der Formel I kann zum einen endständig sein, zum anderen kann ein Quasi-Chelat gebildet werden. Bevorzugt werden Verbindungen der Formel I zur Bildung der Metallkomplexe eingesetzt, bei denen n = 1 und X = H oder Alkyl mit 1 bis 18 C-Atomen bedeutet oder bei denen n = 0 und X = H bedeutet. Besonders bevorzugt werden Verbindungen der Formel I zur Bildung der Metallkomplexe eingesetzt, bei denen A = 0, n = 1 und X = H oder Alkyl mit 1 bis 18 C-Atomen bedeutet oder bei denen A = O, n = 0 und X = H bedeutet.

Bevorzugte Übergangsmetallkomplexe entsprechen den Formeln III bis VII, wobei Verbindungen der Formel I mit A = O, n = 1 und X = H bevorzugt verwendet werden. Es ist dem Fachmann geläufig, diese Formeln III bis VII auch auf die anderen Verbindungen der Formel I, wie zuvor beschrieben zu übertragen.

Bevorzugte Übergangsmetallkomplexe sind daher Verbindungen der Formeln III bis VII 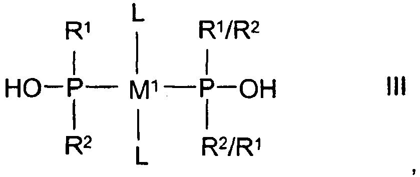 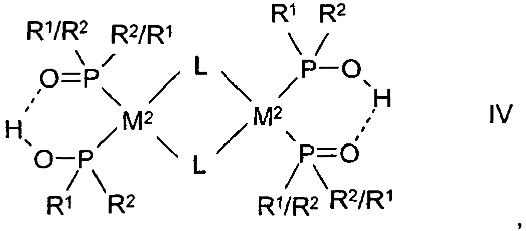 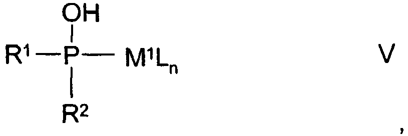 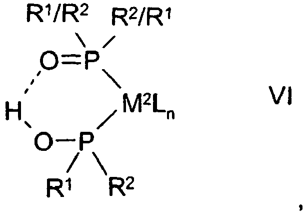 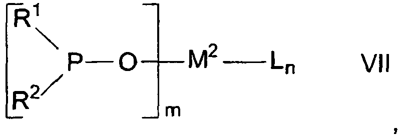 wobei
M¹ und M² ein Übergangsmetall ist, ausgewählt aus der Gruppe Pt, Pd, Rh, Ir, Ru, Ni, Co, Fe, Au, Os, Ti, Zr, V, Cr, Mn, Mo, W, Re, Y, Nd, Yb, Sm, Tb oder La,
L ein anionischer, neutraler oder kationisch geladener Ligand ist,
R¹ und R² jeweils unabhängig voneinander stehen für geradkettige oder verzweigte Perfluoralkylgruppen mit 2 bis 12 C-Atomen und R¹/R² in Formel IV steht für R¹ oder R² bzw. R²/R¹ in Formel IV steht für R² oder R¹ und R⁰ steht für eine geradkettige oder verzweigte Alkylgruppe mit 1 bis 8 C-Atomen und
n die Anzahl der Liganden bedeutet, die zur Absättigung der Valenzen von M¹ oder M² benötigt werden
und
wobei
in Formel VII die Summe n+m der Koordinations-Zahl des Metalls M² entspricht.

In Formel VII kann n auch gleich 0 sein.

M¹ und M² sind bevorzugt ausgewählt aus Pt, Pd, Rh, Ru und Ni, ganz besonders bevorzugt sind Pd und Pt oder Pd oder Pt.

Liganden für erfindungsgemäße Metallkomplexe können anionische, neutrale oder kationisch geladene Liganden sein, die dem Fachmann auf dem Gebiet der Metallkomplexe bekannt sind. Beispiele für Liganden L sind bevorzugt ausgewählt aus H, OH, Cl, =O, CO, CH₃CN, R⁰COO, PR⁰₃, phosphinige Säure, Phosphinite, NR⁰₃, Dialkylether, zyklische Ether inklusive Tetrahydrofuran und Dioxan, Doppel-Bindung, Dreifach-Bindung, Aryl, Cyclopentadienyl, oder heterocyclische Liganden, z.B. heterocyclische Carbene, oder "Pincer Liganden", ganz besonders bevorzugt ist L Cl.

Pincer-Liganden sind beispielsweise bekannt aus C.J. Moulton et al, J. Chem. Soc., Dalteon Trans. 1976, 1020 - 1024, M. E. van der Boom, et al, Chem. Rev. 2003, 103, 1759-1792 und sind dem Fachmann auf dem Gebiet der Katalyse bekannt. Pincer-Komplexe bestehen aus einem Metallzentrum und einem dreizähnigen Liganden, der dabei über mindestens eine Metall-Kohlenstoff-σ-Bindung mit dem Metallzentrum verbunden ist. Beispiele sind planare Arylverbindungen.

Die Substituenten R¹, R², R⁰ haben eine zuvor angegebene oder eine zuvor angegebene bevorzugte Bedeutung.

Die Art des Komplexes, ob ein einkemiger Komplex der Formel III, V, VI oder VII oder ein mehrkerniger Komplex der Formel IV vorliegt richtet sich nach den gewählten Reaktionsbedingungen, Metallkationen und auch Liganden. Es können auch Gemische der genannten Übergangsmetallkomplexe entstehen und verwendet werden.

Sowohl die Übergangsmetallkomplexe der Formeln III bis VII sowie deren Gemische sind für eine homogene Katalyse hervorragend geeignet. Gemische sind daher Gemische der Komplexe der Formel III mit Formel IV, V, VI oder VII, Gemische der Komplexe IV mit Formel V, VI oder VII, Gemische der Komplexe der Formel V mit Formel VI oder VII, Gemische der Formel VI und VII, Dreierkombinationen der Komplexe der Formeln III bis VII oder Viererkombinationen der Komplexe der Formeln III bis VII. Es können auch Gemische vorteilhaft sein, bei denen die Substituenten der Formeln III bis VII, wie zuvor beschrieben, gleich oder verschieden sind.

Vorzugsweise sind die erfindungsgemäßen Metallkomplexe der Formeln III, IV, V, VI oder VII sowie deren Gemische, wie zuvor beschrieben für die folgenden Reaktionen vorteilhaft:
Heck-Reaktion, Suzuki-Reaktion, Hiyama-Reaktion mit Siloxanen, Kumada-Torriu-Reaktion, Negishi-Reaktion, Negishi-Stille-Reaktion, Sonogashira-Reaktion, C-S-Kupplungs-Reaktion, C-N-Kupplungs-Reaktion, C-O-Kupplungs-Reaktion, C-B-Kupplungsreaktion, C-P-Kupplungs-Reaktion, Decarboxylierende Biarylkupplung, Hydroformylierung oder eine C-H-Aktivierung, Polymerisation, oder Oxidations- und Hydrierungsreaktionen.

Details zu den einzelnen Reaktionstypen werden im Folgenden angegeben: Heck-Reaktion: 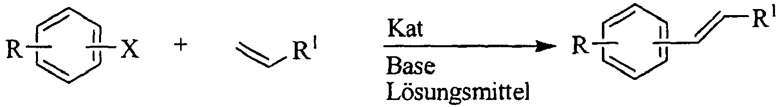 Mechanismus'
- Edukte: 2-Chlor-chinolin, R¹ = CO₂*t*-Bu -> Kat: POPd, POPd1, POPd2¹
- R¹ = CO₂*t*-Bu -> Kat: POPd²
- R¹ = C₆H₅, CO₂Bu -> Kat: Pd(OAc)₂/Carben³
- R¹ = Ph, CO₂*n*-Bu -> Kat: PdHAP-1 ⁴
- R¹ = CO₂*n*-Bu -> Kat: [Pd(C₃H₅)Cl]₂/Tedicyp^{5,6}
- R¹ = CO₂*n*-Bu, CO₂*t*-Bu -> Kat: Pd₂(dba)₃⁷
- R¹ = CO₂*n*-Bu, -> Kat: Pd/Carben-Komplex⁸
- Pd-Katalyse in Ionic Liquids⁹

Basen: K₂CO₃, Na₂CO₃, Cs₂CO₃, NaOAc, Cy₂NMe, Et₃N, *t*-BuOK, *t-*BuONa, DABCO.

Lösungsmittel: DMF, Dioxan, DMA, NMP, Toluol.

Temperatur: Rückfluss.
1 J. P. Knowles, A. Whiting, Org. & Biomol. Chem., 2007, 5, 31-44.
2 C. Wolf, R. Lerebours, J. Org. Chem., 2003, 68, 7077-7084.
3 G. Y. Li, G. Zheng, A. F. Noonan, J. Org. Chem., 2001, 66, 8677-8681.
4 V. Caló, R. Del Sole, A. Nacci, E. Schingaro, F. Scordari, Eur. J. Org. Chem., 2000, 2000, 869-871.
5 K. Mori, K. Yamaguchi, T. Hara, T. Mizugaki, K. Ebitani, K. Kaneda, J. Am. Chem. Soc., 2002, 124, 11572-11573.
6 M. Feuerstein, H. Doucet, M. Santelli, J. Org. Chem., 2001, 66, 5923-5925.
7 M. Feuerstein, H. Doucet, M. Santelli, Synlett., 2001, 12, 1980-1982.
8 A. H. M. de Vries, J. M. C. A. Mulders, J. H. M. Mommers, H. J. W. Henderickx, J. G. de Vries, Org. Lett., 2003, 5, 3285-3288.
9 Ai-E Wang, Jian-Hua Xie, Li-Xin Wang, Qi-Lin Zhou, Tetrahedron, 2005, 61, 259-266.
10R. Singh, M. Sharma, R. Mamgain, D. S. Rawat, J. Braz. Chem. Soc., 2008, 19, 357-379.
   Suzuki-Reaktion 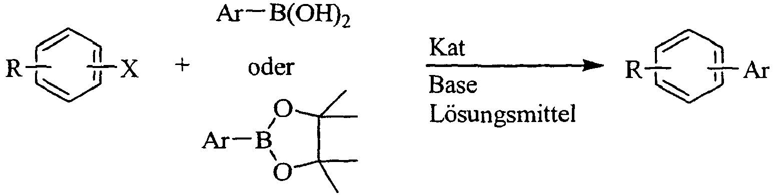
   - Reaktion bei Raumtemperatur -> Kat: Pd₂(dba)₃/P(*t*-Bu)₃¹¹
   - Reaktion bei Raumtemperatur -> Kat: [Cl₂Pd(COD)]/Piperazine¹²
   - R = 2-Fluorbenzol -> Kat:Pd(OAc)₂/Phosphanligand¹³
   - Ar = C₆F₅ -> Kat: Pd₂(dba)₃/P(*t*-Bu)₃¹⁴
   - Ar = C₆F₅ + Dibromthiophene-> Pd(PPh₃)₄¹⁵
   - Ar = Ph -> Kat: POPd¹⁶
   - Nickelkatalysator [Ni(cod)₂]/PCy₃ (Cyclohexan)¹⁷
   - Nickelkatalysator [Ni(dppf)Cl₂]¹⁸
   - R = Benzylische Phosphate -> Kat: Pd(OAc)₂/PPh₃¹⁹
   - Übersichtsartikel vgl. mit Stille und Si(OMe)₃²⁰
11A. F. Littke, C. Dai, G. C. Fu, J. Am. Chem. Soc., 2000, 122, 4020-4028.
12S. Mohanty, D. Suresh, M. S. Balakrishna, J. T. Mague, Tetrahedron, 2008, 64, 240-247.
13J. Kingston, J. Verkade, J. Org. Chem., 2007, 72, 2816-2822.
14T. Korenaga, T. Kosaki, R. Fukumura, T. Ema, T. Sakai, Org. Lett., 2005, 7, 4915-4917.
15K. Takimiya, N. Niihara, T. Otsubo, Synthesis, 2005, 10, 1589-1592.
16G. Y. Li, J. Angew. Chem., 2001, 113, 1561-1564.
17M. Tobisu, T. Shimasaki, N. Chatani, Angew. Chem., 2008, 120, 4944-4947.
18A. F. Indolese, Tetrahedron Lett., 1997, 38, 3513-3516.
19M. McLaughlin, Org. Lett., 2005, 7, 4875-4878.
20C. J. Handy, A. S. Manoso, W. T. McElroy, W. M. Seganish, P. DeShong, Tetrahedron, 2005, 61, 12201-12225. 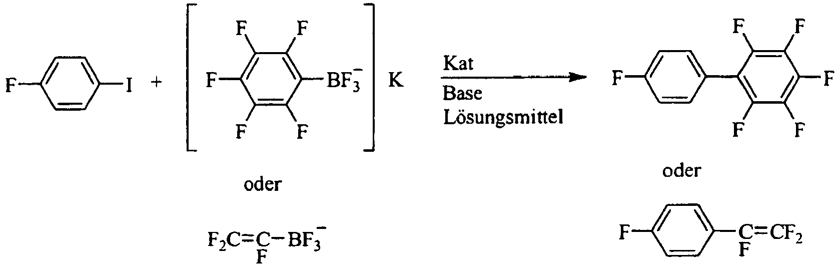 -> Variante mit Perfluoralkyltrifluorboraten; Kat: Pd(OAc)₂/PPh₃²¹ Weitere Arbeiten ->
   - Kat: [Pd(dppf)Cl₂]²²
   - Vinyltrifluorborat und Benzyl 3,5-bis(benzyloxy)-4-bromobenzoat -> Kat:
      [Pd(dppf)Cl₂]²³ 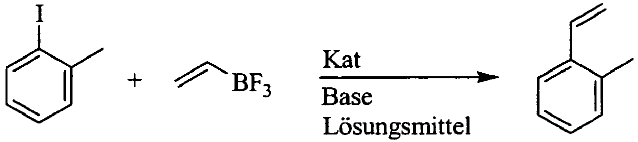
   - Kat: Pd(OAc)₂²⁴
      → Review²⁵
   Basen: K₂CO₃, Na₂CO₃, Cs₂CO₃, CsF, KF, *t*-BuOK, *t*-BuONa, NaOH, KOH, K₃PO₄.
   Lösungsmittel: Dioxan, THF, MeOH, Me₂CHOH, DME, Toluol, DMF, DMA, NMP.
   Temperatur: RT bis Rückfluss.
21 H.-J. Frohn, N. Yu. Adonin, V. V. Bardin, V. F. Starichenko, Tetrahedron Lett., 2002, 43, 8111-8114.
22 G. W. Kabalka, G. Dong, B. Venkataiah, Tetrahedron Lett., 2004, 45, 5139-5141.
23 R. R. Carter, J. K. Wyatt, Tetrahedron Lett., 2006, 47, 6091-6094.
24 L. Joucla, G. Cusati, C. Pinel, L. Djakovitch, Tetrahedron Lett., 2008, 49, 4738-4741.
25 S. Darses, J.-P. Genet, Chem. Rev., 2008, 108, 288-325.
   Hyama Reaktion mit Siloxanen 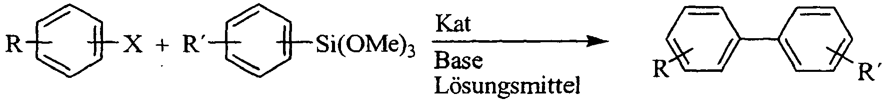
   - Reaktion mit Arylhalogeniden in Wasser -> Kat: POPd₁²⁶
   - Edukt: 4-Halochinolin -> Kat POPd, POPd1, POPd2²⁷
   - Übersichtsartikel vgl. mit Stille und Suzuki²⁰
   Basen: TBAF, K₂CO₃, Na₂CO₃, Cs₂CO₃, NaOH, KOH, K₃PO₄. Lösungsmittel: DMF, MeCN, *i*-PrOH, EtOAc, DMA, THF.
   Temperatur: Rückfluss.
26 C. Wolf, R. Lerebours, Org. Lett., 2004, 6, 1147-1150.
27 C. Wolf, R. Lerebours, E. H. Tanzini, Synthesis, 2003, 13, 2069-2073.
   Kumada-Toriu-Reaktion 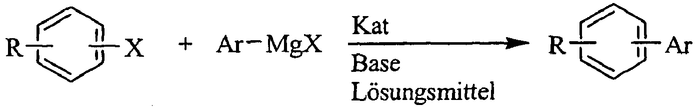 Kat: POPd, POPd1²⁸
28 G. Y. Li, J. Organomet. Chem., 2002, 653, 63-68. 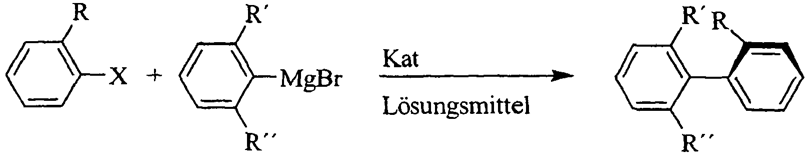
   - R = Me, iso-Propyl, OMe; R'= Me, Cyclohexan, OMe, R" = Me, H, OMe; bzw. 2-MgBr-Terphenyl -> Kat: POPd, Ni(COD)₂/(*t*-Bu)₂P(O)H ²⁹ Lösungsmittel: THF, Dioxan, Et₂O, DME.
      Temperatur: RT oder Rückfluss
29 C. Wolf, H. Xu, J. Org. Chem., 2008, 73, 162-167.
   Negishi-Reaktion 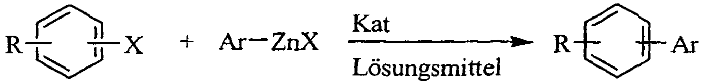
   - Ar = Ph, X = Cl -> Kat: POPd, POPd2³⁷
   - Ar = Alkyl, Aryl, Alkenyl -> Kat: Pd₂(dba)₃/PCyp₃ (Anm.: Cyp = Cyclopentyl)³⁰
   - R = 2,4,6-iso-Propyl, Ar = OMe -> Kat Pd₂(dba)₃/ S-Phos bzw. RuPhos etc.³¹
   Lösungsmittel: NMP, THF, Toluol, DME.
   Temperatur: Raumtemperatur bis Rückfluss
30 J. Zhou, G. C. Fu, J. Am. Chem. Soc., 2003, 125, 12527-12530.
31 J. E. Milne, S. L. Buchwald, J. Am. Chem. Soc., 2004, 126, 13028-13032.
   Negishi-Stille-Reaktion 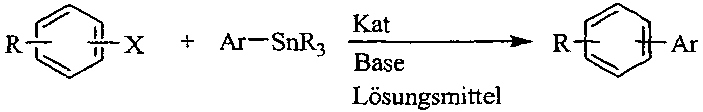
   - Edukt: 4-Halochinolin -> Kat: POPd, POPd1, POPd2^{2, 32}
   - Eintopf-Synthese von Stille und Heck Reaktion³³
   Basen: R₃N.
   Lösungsmittel: Dioxan, DMF, THF.
   Temperatur: Rückfluss.
32 C. Wolf, R. Lerebours, J. Org. Chem., 2003, 68, 7551-7554.
33 P. von Zezschwitz, F. Petry, A. de Meijere, Chem. Eur. J., 2001, 7, 4035-4046.
   Sonogashira-Reaktion 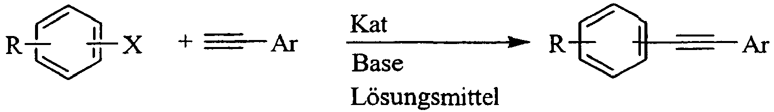
   - Verwendung von verschiedenen sterisch anspruchsvollen Phosphanliganden und Berechnung der Kinetik³⁴
   - Sonogashira-Reaktion in Wasser³⁵
   - Sonogashira-Reaktion in lonic Liquid³⁶
   Basen: Amine, Pyrolidin, NaOH, KOH, K₂CO₃, Cs₂CO₃, Na₂CO₃.
   Lösungsmittel: Dioxan, DMF, 1-*n*-Butyl-3-methylimidazolium-Tetrafluoroborat.
   Temperatur: Rückfluss
34 M. R. an der Heiden, H. Plenio, S. Immel, E. Burello, G. Rothenberg, H. C. J. Hoefsloot, Chem. Eur. J., 2008, 14, 2857-2866.
35 C. Wolf, R. Lerebours, Org. Biomol. Chem., 2004, 2, 2161.
36 J.-C. Hierso, J. Boudon, M. Picquet, P. Meunier, Chem. Eur. J., 2007, 13, 583-587.
   C-S-Kupplungs-Reaktion 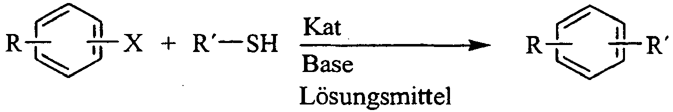
   - R'= *t*-Bu; -> Kat: POPd¹⁶
   - R'= Alkyl, Ph -> Kat: POPd, POPd1^{3, 2, 37}
   Basen: *t*-BuOK, *t*-BuONa, Cy₂NMe, Et₃N, K₂CO₃, Cs₂CO₃, Na₂CO₃. Lösungsmittel: DMSO, Dioxan, Toluol, DME.
   Temperatur: RT bis Rückfluss.
37 G. Y. Li, J. Org. Chem., 2002, 67, 3643-3650.
   C-N-Kupplungs-Reaktion 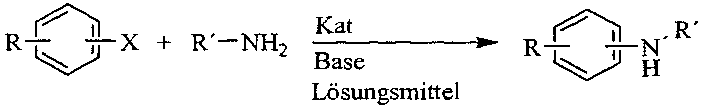
   - Edukt: 4-Halochinolin; R'= Ph -> Kat: POPd, POPd1, POPd2^{2, 3, 16}
   - Kupferkatalysator bei Raumtemperatur [CuI/*N*,*N*-diethylsalicylamid]³⁸
38 A. Shafir, S. L. Buchwald, J. Am. Chem. Soc., 2006, 8742-8473. 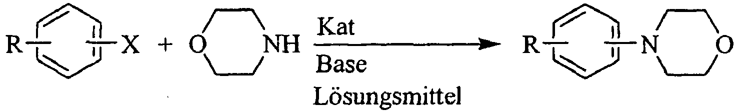
   - Reaktion bei Raumtemperatur -> Kat: Pd(OAc)₂/Phosphanligand³⁹
39 Ch. V. Reddy, J. V. Kingston, J. G. Verkade, J. Org. Chem., 2008, 73, 3047-3062. 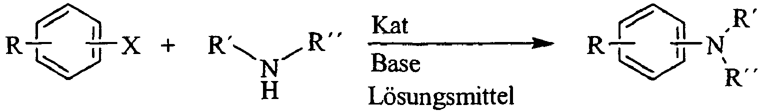
   - Reaktion bei Raumtemperatur; R'= Me, R" = Ph -> Kat: Pd(OAc)₂/Phosphanligand³⁹
   - Reaktion bei 80°C Ph -> Kat: Pd(OAc)₂/Phosphanligand³⁹
   - Nickelkatalysator [*trans*-Haloarylbis(triphenylphosphin)nickel(II)]⁴⁰
   - Reaktion bei Raumtemperatur -> Kat: Pd(OAc)₂/Phosphanligand³⁹
40 C. Chen, L.-M. Yang, J. Org. Chem., 2007, 72, 6324-6327. 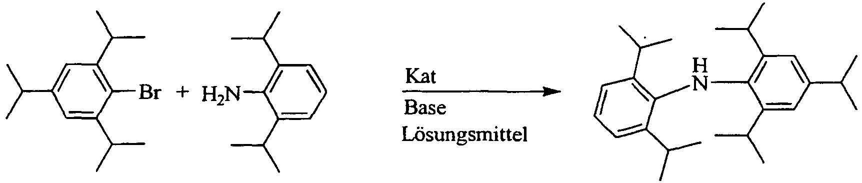
   - Reaktion bei Raumtemperatur -> Kat: Pd(OAc)₂/Phosphanligand³⁹ 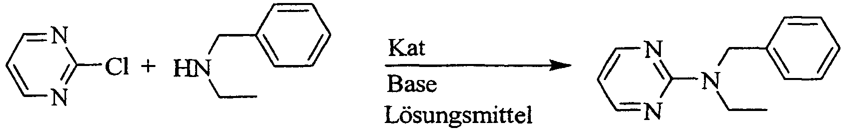
   - Reaktion bei Raumtemperatur -> Kat: Pd(OAc)₂/Phosphanligand³⁹
      Basen: *t*-BuOK, *t*-BuONa, R₃N, NaOH, KOH, K₂CO₃, Cs₂CO₃, Na₂CO₃. Lösungsmittel: DMSO, Dioxan, Toluol, DMF.
      Temperatur: RT bis Rückfluss.
      C-O-Kupplungs-Reaktion 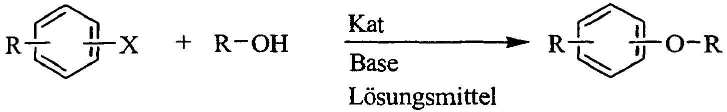
   - C-O-Kupplung mit anschließender Claisen-Umlagerung -> Kat: Cu/Aminligand [1,10-phenanthrolin]⁴¹
   - C-O-Kupplung bei primären und sekundären Alkoholen -> Kat: Pd(OAc)₂/Phosphanliganden [Anm.: Firma Strem]⁴²
   - C-N- vs. C-O-Kupplung bei Aminoalkoholen -> Selektivität in der kupferkatalysierten Synthese [CuI/Diketon]⁴³
41 G. Nordmann, S. L. Buchwald, J. Am. Chem. Soc., 2003, 125, 4978-4979.
42 A. V. Vorogushin, X. Huang, S. L. Buchwald, J. Am. Chem. Soc., 2005, 127, 8146-8149.
43 A. Shafir, P. A. Lichtor, S. L.. Buchwald, J. Am. Chem. Soc., 2007, 129, 3490-3491. 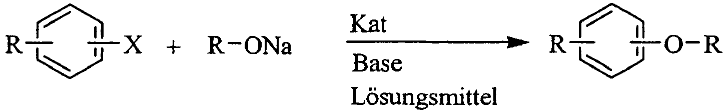
   - X = Br, Cl; R = *t*-Bu -> Kat: Pd₂(dba)₃/P(*t*-Bu)₃, bzw. Phosphanligand, der nicht luftstabil ist⁴⁴
      Basen: *t*-BuOK, *t*-BuONa, NaOH, KOH, K₂CO₃, Cs₂CO₃, Na₂CO₃. Lösungsmittel: DMSO, Dioxan, Toluol, DMF, DME, o-Xylol.
      Temperatur: Rückfluss.
44 G. Mann, C. Incarvito, A. L. Rheingold, J. F. Hartwig, J. Am. Chem. Soc., 1999, 121, 3224-3225.
   C-B-Kupplungs-Reaktion 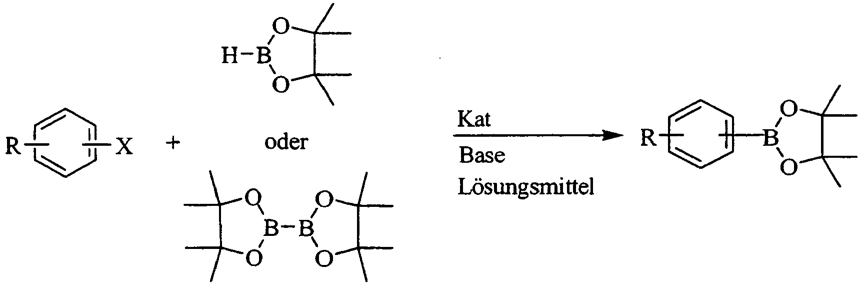
   - Edukt: R¹R²N-BH₂ R¹ = R² = *i*Pr -> Kat: (PPh₃)₂PdCl₂⁴⁵
45 L. Euzenat, D. Horhant, Y. Ribourdouille, C. Duriez, G. Alcaraz, M. Vaultier, Chem. Commun., 2003, 2280-2281. 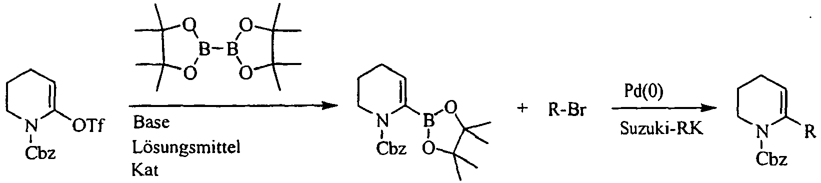
   - Edukt: Lactam-Derivat; anschließende Umsetzung in der Suzuki-Reaktion⁴⁶
46 A. Ferrali, A. Guama, F. Lo Galbo, E. G. Occhiato, Tetrahedron Lett., 2004, 45, 5271-5274. 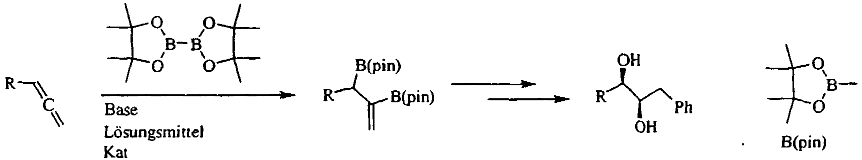
   - Edukt: Dien -> Kat: Pd₂(dba)₃/Phosphanligand⁴⁷
      Basen: NaOH, KOH, K₂CO₃, Cs₂CO₃, Na₂CO₃, K₃PO₄, R₃N. Lösungsmittel: Dioxan, Toluol, DMF, DME.
      Temperatur: Rückfluss
47 N. F. Pelz, J. P. Morken, Org. Letf., 2006, 8, 4557-4559.
   C-P-Kupplungs-Reaktion 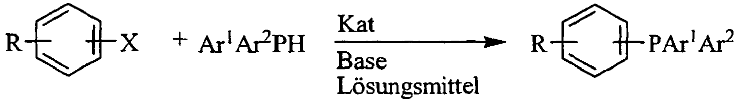
   - Edukt: 2,6-Dibrompyridin -> Kat: Pd(OAc)₂⁴⁸
   - Ar¹ = Ar² = Ph -> Kat: Pd(OAc)₂; Mikrowellen⁴⁹
   - Ar¹ = 2-(CF₃)C₆H₄ -> Kat: Pd(OAc)₂/Phosphanligand⁵⁰
   Basen: R₃N, N-Me-piperidin, KOAc, NaOAc, DABCO, K₂CO₃, Cs₂CO₃, Na₂CO₃.
   Lösungsmittel: Toluol, DMF, DMA, Acetonitril, Methanol, NMP. Temperatur: Rückfluss
48 O. Herd, A. Heßler, M. Hingst, M. Tepper, O. Stelzer, J. Organomet. Chem., 1996, 522, 69-76.
49 A. Stadler, C. O. Kappe, Org. Lett., 2002, 4, 3541-3543.
50 C. Korff, G. Helmchen, Chem. Commun., 2004, 530-531. Decarboxylierende Biarylkupplung 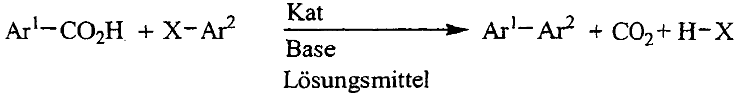
   - Verwendung verschiedener heteroaromatischer Carbonsäuren -> Kat: Pd/P(*t*-Bu)₃⁵¹
51 P. Forgione, M.-C. Brochu, M. St-Onge, K. H. Thesen, M. D. Bailey, F. Bilodeau, J. Am. Chem. Soc., 2006, 128, 11350-11351. 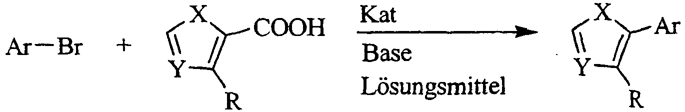 X = O,N,S
   Y = CH, N
   -> Kat: Pd/P(*t*-Bu)₃⁵²
   Vorteil gegenüber der C-H-Aktivierung ist die Regioselektivität, die durch die Carbonylfunktion gewährleistet ist.
   Basen: K₂CO₃, Cs₂CO₃, Na₂CO₃, K₃PO₄, R₃N.
   Lösungsmittel: NMP, Toluol, DMF, DME.
   Temperatur: Rückfluss
52 O. Baudoin, Angew. Chem., 2007, 119, 1395-1397.
   Hydroformylierung 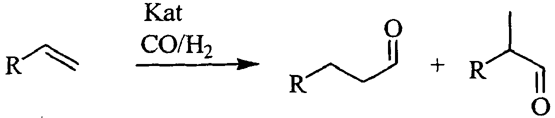
   - Kat. Rh(I)/BISBI, BIPHEPHOS, XANTPHOS⁵³
   - Charakterisierung der Intermediate -> Pt/Ph₂POH⁵⁴
   - langkettige α-Olefine > C₇; Zweiphasensystem H₂O/organisches Lösungsmittel -> Kat: Phosphonat-Phosphan-Komplex⁵⁵
   - stereoselektive Hydroformylierung von Enamiden -> Kat: Rh(acac)(CO)₂/Phosphit-Liganden⁵⁶
   - Untersuchungen von Phosphiten mit verschiedenen sterischen und elektronischen Eigenschaften (Bsp.: 4-CF₃-C₆H₄); Verwendung von überkritischem CO₂ -> Kat: Rh/Phosphite⁵⁷
   - Hydroformylierung in Ionic Liquids⁵⁸
   Lösungsmittel: Toluol, H₂O.
   Temperatur: 60-120°C.
   Sonstige Bed.: 20 - 60 bar CO₂/H₂
53 B. Breit, Acc. Chem. Res., 2003, 36, 264-275.
54 P. W. N. M. van Leeuwen, C. F. Roobeek, J. H. G. Frijns, G. Orpen, Organometallics, 1990, 9, 1211-1222.
55 S. Bischoff, M. Kant, Ind. Eng. Chem. Res., 2000, 39, 4908-4913.
56 O. Saidi, J. Ruan, D. Vinci, X. Wu, J. Xiao, TetrahedronLett., 2008, 49, 3516-3519.
57 C. T. Estorach, A. Orej'on, A. M. Masdeu-Bult'o, Green Chemistry, 2008, 10, 545-552.
58 M. Haumann, A. Riisager, Chem. Rev., 2008, 108, 1474-1497.
   C-H-Aktivierung 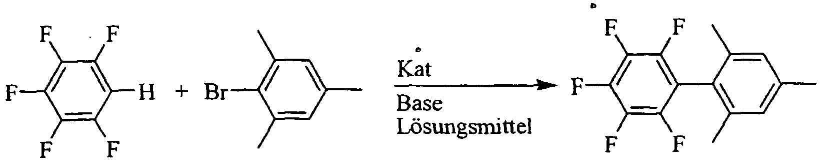 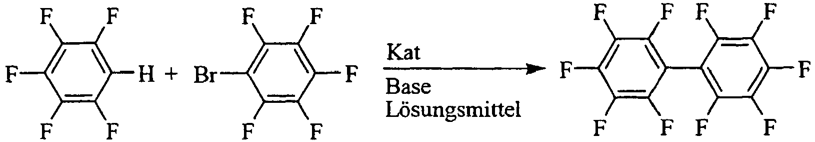
   - Edukte: Pentafluorbenzol, 2,3,5,6-Tetrafluorpyridin, 1,3,5-Trifluorbenzol etc. -> Kat: Pd(OAc)₂/S-Phos⁵⁹ [weitere Arbeiten]^{60, 61}
   - Gold-katalysierte Reaktionen ausgehend von der C-H-Aktivierung⁶²
   Basen: K₂CO₃, Cs₂CO₃, Na₂CO₃, R₃N, KO*t*-Bu, NaO*t*-Bu.
   Lösungsmittel: Toluol, DMF, DME, DMA, *i*-PrOAc, EtOAc.
   Temperatur: Rückfluss.
59 M. Lafrance, D. Shore, K. Fagnou, Org. Lett., 2006, 8, 5097-5100.
60 M. Lafrance, C. N. Rowley, T. K. Woo, K. Fagnou, J. Am. Chem. Soc., 2006, 128, 8754-8756.
61 L.-C. Campeau, M. Parisien, A. Jean, K. Fagnou, J. Am. Chem. Soc., 2006, 128, 581-590.
62 R. Skouta, C.-J. Li, Tetrahedron, 2008, 64, 4917-4938.

Strukturen der verwendeten Katalysatoren in der Literatur:

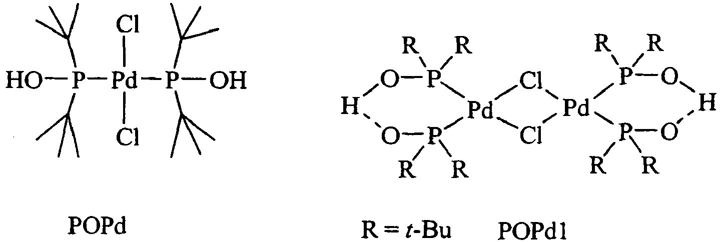

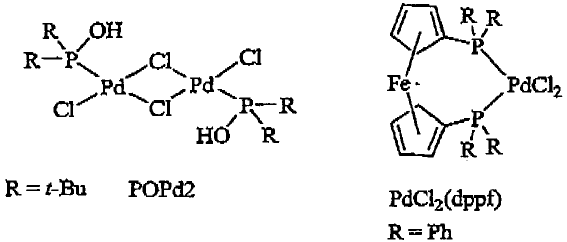

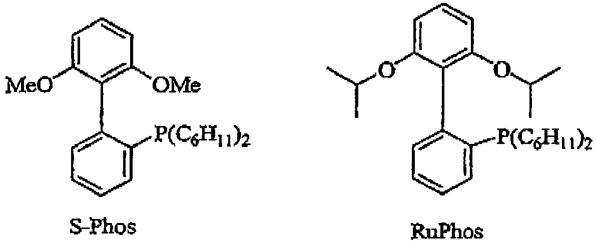

Ein Gegenstand der Erfindung ist auch ein Verfahren zur Herstellung der Übergangsmetallkomplexe nach Anspruch 6 , dadurch gekennzeichnet, dass eine Verbindung der Formel I, wie zuvor in Anspruch 1 beschrieben, insbesondere bevorzugt wobei X = H und n = 1 bedeutet, mit einer Precursorverbindung enthaltend das Übergangsmetall, insbesondere eine Verbindung M¹L₂ oder M²L₂ umgesetzt wird, wobei M¹, M² und L eine der zuvor angegebenen Bedeutungen oder bevorzugten Bedeutungen haben.

Die Umsetzung erfolgt beispielsweise in einem organischen Lösungsmittel. Die Umsetzung kann jedoch auch ohne Lösungsmittel erfolgen. Geeignete Lösungsmittel sind Diethylether, 1,2-Dimethoxyethan, Acetonitril oder Tetrahydrofuran. Bevorzugt wird Diethylether eingesetzt.

Die Reaktion findet bei -30°C bis zum Siedepunkt des Lösungsmittels statt, bevorzugt bei 0°C bis Raumtemperatur, besonders bevorzugt bei Raumtemperatur.

Die Reaktion findet bevorzugt unter Einsatz von getrockneten Lösungsmitteln statt und unter Inertgasbedingungen, d.h. unter Inertgasen wie Argon oder Stickstoff, statt.

Gegenstand der Erfindung ist auch die Verwendung von Komplexen der Formel III, IV, V, VI oder VII sowie deren Gemische als Katalysator, zur Behandlung von Oberflächen oder zur Herstellung von Nanopartikeln des entsprechenden Metalls M¹ oder M².

Die Synthese von Nanopartikeln erfolgt durch die Reduktion, Thermolyse, Photolyse oder Elektrolyse von Komplexen der Formel III, IV, V, VI oder VII oder Salzen der Formel II in Lösungsmitteln, z. B. in organischen Lösungsmitteln oder ionischen Flüssigkeiten, oder in einer inerten flüssigen oder gasförmigen Phase, oder ohne Lösungsmittel (J. Krämer et al., Ionische Flüssigkeiten als Templat für Nanosynthesen, GIT Labor-Fachzeitschrift, Nr. 4, 2008, S. 400-403; E. Redel et al., First Correlation of Nanoparticles Size-Dependent Formation with Ionic Liquid Anion Molecular Volume, Inorganic Chemistry, 47, 2008, p.14-16).

Weiterhin bilden die Salze der Formel II, wie zuvor beschrieben, wobei für Y⁺ Ag⁺, Li⁺_{,} Na⁺, K⁺, Rb⁺ oder Cs⁺ ausgenommen ist, bevorzugt eine ionische Flüssigkeit.

Einsatzgebiete der ionischen Flüssigkeiten sind beispielsweise die Verwendung als Lösungsmittel oder lösungsmittelzusatz, als Phasentransferkatalysator, als Extraktionsmittel, als Wärmeträger, als oberflächenaktive Substanz, als Weichmacher, als Antistatika, als Flammschutzmittel oder als Leitsalz oder als Additiv für elektrochemische und photo-elektrochemische Zellen.

Salze der Formel II, wie zuvor beschrieben, wobei für Y⁺

Ag⁺, Li⁺, Na⁺, K⁺, Rb⁺ oder Cs ausgenommen ist, können als Lösungsmittel oder Lösungsmittelzusatz, als Phasentransferkatalysator, als Extraktionsmittel, als Wärmeträger, als oberflächenaktive Substanz, als Weichmacher, als Antistatika, als Flammschutzmittel oder als Leitsalz oder als Additiv für elektrochemische und photo-elektrochemische Zellen verwendet werden.

Im Falle der Verwendung als Lösungsmittel eignen sich dieses in jeder dem Fachmann bekannten Art von Reaktion, z.B. für Übergangsmetall- oder Enzym-katalysierte Reaktionen, wie beispielsweise Hydroformylierungsreaktionen, Oligomerisierungsreaktionen, Veresterungen oder Isomerisierungsreaktionen, wobei die genannte Liste nicht abschließend ist.

Bei Verwendung als Extraktionsmittel kann die ionische Flüssigkeit zur Abtrennung von Reaktionsprodukten aber auch zur Abtrennung von Verunreinigungen eingesetzt werden, je nachdem wie die Löslichkeit der jeweiligen Komponente in der ionischen Flüssigkeit ist. Darüber hinaus können die ionischen Flüssigkeiten auch als Trennmittel bei der Separation mehrerer Komponenten dienen, beispielsweise bei der destillativen Trennung mehrerer Komponenten eines Gemisches.

Weitere Anwendungsmöglichkeiten sind die Anwendung als Weichmacher in Polymermaterialien, als Flammschutzmittel für eine Reihe von Materialien oder Anwendungen sowie als Leitsalz oder Additiv in unterschiedlichen elektrochemischen Zellen und Anwendungen, z.B. in galvanischen Zellen, in Kondensatoren oder in Brennstoffzellen.

Weitere Anwendungsfelder für ionische Flüssigkeiten, d.h. hier der Salze der Formel II, wie zuvor definiert, sind der Einsatz als Lösungsmittel für Kohlenhydrate enthaltende Feststoffe, insbesondere Biopolymere und Derivate oder Zersetzungsprodukte davon. Zusätzlich können einige bevorzugte Salze der Formel II als Schmierstoff, Arbeitsflüssigkeiten für Maschinen, wie beispielsweise Kompressoren, Pumpen oder hydraulische Vorrichtungen geeignet sein. Weiterhin können einige bevorzugte Salze der Formel II auch für elektrooptische Zellen, beispielsweise in Sensoren, geeignet sein.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele:

Die NMR-Spektren wurden an Lösungen in deuterierten Lösungsmitteln bei 20°C an einem Bruker Avance 300 Spektrometer mit einem 5 mm Breitbandkopf ¹H/BB mit Deuterium Lock gemessen, falls nicht in den Beispielen angegeben. Die Messfrequenzen der verschiedenen Kerne sind: ¹H: 300,13 MHz, ¹⁹F: 282,41 MHz, ³¹P: 121,49 MHz und ¹³C: 75,47 MHz. Die Methode der Referenzierung wird bei jedem Spektrum bzw. bei jedem Datensatz separat angegeben.

### Beispiel 1: Bis(pentafluorethyl)phosphinige Säure

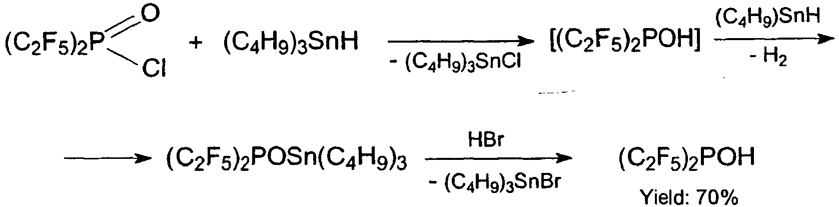

4.79 g (16.5 mmol) (C₄H₉)₃SnH werden in 1,6-Dibromhexan gelöst und die Lösung wird für 15 min. entgast (Vakuum). 2.20 g (6.9 mmol) Bis(pentafluorethyl)phosphinsäurechlorid, (C₂F₅)₂P(O)Cl, wird zugegeben. Die Lösung wird 30 min bei Raumtemperatur gerührt und anschließend werden die flüchtigen Produkte im Vakuum entfernt. Der Rückstand wird in HBr-Atmosphäre (7.3 mmol) für 20 min bei Raumtemperatur gerührt und danach die flüchtigen Verbindungen unter dynamischen Vakuumbedingungen entfernt. Es werden drei Kühlfallen mit unterschiedlicher Temperatur eingesetzt, bei -30°C, -78°C und -196° C.

Bei -78° C, wird eine ungefärbte Flüssigkeit erhalten und als Bis(pentafluorethyl)phosphinige Säure identifiziert. Die Verbindung ist bei Raumtemperatur unter Inertgasbedingungen stabil.

¹H NMR (C₆D₆; Standard: TMS), δ, ppm: 2.2 s.
¹⁹F NMR (CDCl₃; Standard: CCl₃F), δ, ppm: -81.9 d,m (2CF₃), -123.4 d,d,m (CF₂, F_{A}), -124.5 d,d,m (CF₂, F_{B}), ²*J*_{P,F(A)} = 71 Hz, ²*J*_{P,F(B)} = 57 Hz, ²*J*_{F(A),F(B)} = 320 Hz, ³*J*_{P,F} = 15 Hz.
³¹P NMR (CDCl₃; Standard: 85 % H₃PO₄), δ, ppm: 84.4 m.

### Beispiel 2: Bis(pentafluorethyl)phosphinigsäurechlorid oder synonym Bis(pentafluorethyl)chlorphosphin

### Methode A:

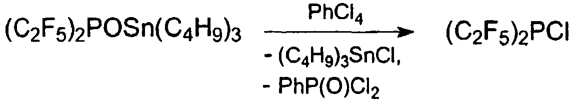

Zu einer Lösung von 4.9 g (16.8 mmol) (C₄H₉)₃SnH in 1,6-Dibromhexan werden 2.5 g (7.8 mmol) Bis(pentafluorethyl)phosphinsäurechlorid, (C₂F₅)₂P(O)Cl, zugegeben. Die Reaktionsmischung wird eine Stunde bei Raumtemperatur gerührt und danach die flüchtigen Verbindungen im Vakuum entfernt. 1.24 g (5.0 mmol) C₆H₅PCl₄ werden zugegeben und die Mischung wird 20 min bei Raumtemperatur gerührt. Die flüchtigen Verbindungen werden unter dynamischen Vakuumbedingungen entfernt. Drei Kühlfallen werden eingesetzt: -30°C, -78°C und -196° C. Die Kühlfalle bei -196° C enthält die farblose Flüssigkeit, identifiziert als Bis(pentafluorethyl)phosphinigsäurechlorid, (C₂F₅)₂PCl. Die Verbindung ist bei Raumtemperatur unter Inertgasbedingungen stabil.

¹⁹F NMR(Diethylether ; Standard: CCl₃F), δ, ppm: -80.8 d,m (2CF₃), -116.5 m (2CF₂, A,B - System), ³*J*_{P,F} = 14 Hz.
³¹P NMR (Diethylether; Standard: 85 % H₃PO₄), δ, ppm: 60.4 m.

### Methode B:

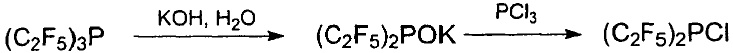

Eine Lösung von 1.16 g (3.0 mmol) Tris(pentafluorethyl)phosphin, (C₂F₅)₃P, in 1,2-Dimethoxyethan wird mit einem Überschuss (6 mmol) einer 1.5 M-Lösung von KOH in Wasser behandelt. Die Mischung wird für 30 min bei Raumtemperatur gerührt und das Lösungsmittel wird im Vakuum entfernt. Der Rückstand wird in 1,2-Dimethoxyethan aufgenommen und es wird ein Überschuss an PCl₃ (6 mmol) zugegeben. Man erhält Bis(pentafluorethyl)phosphinigsäurechlorid, (C₂F₅)₂PCl, identifiziert wie zuvor beschrieben.

### Beispiel 3: Bis(pentafluorethyl)phosphinigsäureethylester

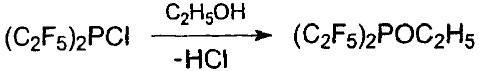

Bis(pentafluorethyl)phosphinigsäurechlorid, (C₂F₅)₂PCl, erhältlich nach Beispiel 2, werden zu einer Mischung von Ethanol und 4-Dimethylaminopyridin in Diethylether bei Raumtemperatur zugegeben. Das ausfallende Produkt 4-Dimethylaminopyridiniumchlorid wird abgetrennt und die Lösung enthält Bis(pentafluorethyl)phosphinigsäureethylester, (C₂F₅)₂POC₂H₅.

Eine Isolierung der Verbindung erfolgt nach herkömmlichen Methoden.
¹⁹F NMR(Diethylether ; Standard: CCl₃F), δ, ppm: -81.6 d,m (2CF₃), -122.6 m (2CF₂, A,B - system), ³*J*_{P,F} = 15 Hz.
³¹P{¹⁹F} NMR (Diethylether; Standard: 85 % H₃PO₄), δ, ppm: 105.7 m, ³*J*_{P,H} = 9 Hz.

### Beispiel 4: Bis(pentafluorethyl)phosphinigsäuretributylstannylester

(C₂F₅)₂POH + (C₄H₉)₃SnH → (C₂F₅)POSn(C₄H₉)₃ + H₂

Zu einer Mischung von 0.22 g (0.8 mmol) Tributylzinnhydrid, (n-C₄H₉)₃SnH, in 10 ml trockenem Diethylether werden 0.29 g (1.0 mmol) Bis(pentafluorethyl)phosphinigsäure (C₂F₅)₂POH, erhältlich nach Beispiel 1, bei -196°C zukondensiert. Die Reaktionsmischung wird bei Raumtemperatur 15 min gerührt und anschließend das Lösungsmittel im Vakuum entfernt. Der Rückstand ist eine farblose Flüssigkeit, Bis(pentafluorethyl)phosphinigsäuretributylstannylester. Die Verbindung ist bei Raumtemperatur unter Inertgasbedingungen stabil.

¹⁹F NMR (C₆D₆ ; Standard: CCl₃F), δ, ppm: -81.0 d,m (2CF₃), -124.3 d,d,m (CF₂, F_{A}), -124.9 d,d,m (CF₂, F_{B}), ²*J*_{P,F(A)} = 74 Hz, ²*J*_{P,F(B)} = 66 Hz, ²*J*_{F(A),F(B)} = 319 Hz, ³*J*_{P,F} = 14 Hz.
³¹P{¹⁹F} NMR (C₆D₆; Standard: 85 % H₃PO₄), δ, ppm: 107.4, ²*J*_{P,Sn} = 48 Hz.
¹⁹Sn NMR (C₆D₆; Standard: (CH₃)₄Sn), δ, ppm: 180.7 d, ²*J*_{Sn,P} = 48 Hz.

### Beispiel 5: Bis(pentafluorethyl)phosphinigsäuretrimethylsilylester

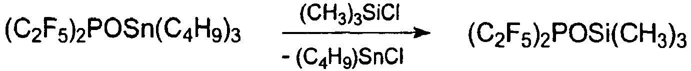

Zu einer Mischung von
Bis(pentafluorethyl)phosphinigsäuretributylstannylester und Tributylzinnchlorid, welches nach der Beschreibung von Beispiel 1 oder 4 erhältlich ist, wird ein Überschuss von Trimethylsilylchlorid, (CH₃)₃SiCl, zugegeben. Man erhält Bis(pentafluorethyl)phosphinigsäuretrimethylsilylester, (C₂F₅)₂POSi(CH₃)₃. Eine Isolierung der Verbindung erfolgt nach herkömmlichen Methoden.

¹⁹F NMR (Diethylether ; Standard: CCl₃F), δ, ppm: -82.8 d (2CF₃), -124.1 d (2CF₂), ²*J*_{P,F} = 73 Hz, ³*J*_{P,F} = 15 Hz.
³¹P NMR (Diethylether; Standard: 85 % H₃PO₄), δ, ppm: 94.6 sept, quin; ²*J*_{P,F} = 73 Hz, ³*J*_{P,F} = 14 Hz.
²⁹Si{¹H} NMR (Diethylether; Standard: Tetramethylsilan), δ, ppm: 31.1 d, ²*J*_{Si,P} = 8 Hz.

### Beispiel 6: Bis(pentafluorethyl)phosphin

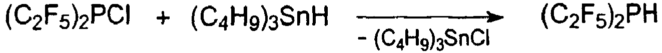

0.3 g (1.0 mmol) Bis(pentafluorethyl)phosphinigsäurechlorid, (C₂F₅)₂PCl, erhältlich nach Beispiel 2, wird zu einer entgasten Lösung von 0.61 g (2.0 mmol) Tributylzinnhydrid, (*n*-C₄H₉)₃SnH, in 1,6-Dibromhexan kondensiert. Es wird für eine Stunde bei Raumtemperatur gerührt und anschließend die flüchtigen Verbindungen unter dynamischen Vakuumbedingungen entfernt. Drei Kühlfallen werden verwendet: -30°C, -78°C und -196°C. Die Kühlfalle bei -196° C enthält eine farblose Flüssigkeit, Bis(pentafluorethyl)phosphin, (C₂F₅)₂PH. Die Verbindung ist bei Raumtemperatur unter Inertgasbedingungen stabil.

¹H NMR (C₆D₆; Standard: TMS), δ, ppm: 3.7 d,m, ¹*J*_{P,H} = 232 Hz.
¹⁹F NMR (C₆D₆ ; Standard: CCl₃F), δ, ppm: -83.5 d,m (2CF₃), -102.3 d,m (CF₂, F_{A}), -108.9 d,m (CF₂, F_{B}), ³*J*_{P,F} = 15 Hz.
³¹P NMR (C₆D₆; Standard: 85 % H₃PO₄), δ, ppm: -51.6 d,m, ¹*J*_{P,H} = 230 Hz.

### Beispiel 7: Natriumbis(pentafluorethyl)phosphinit

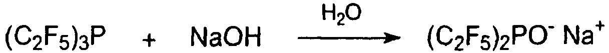

Eine Lösung von 1.16 g (3.0 mmol) Tris(pentafluorethyl)phosphin (C₂F₅)₃PH, in 1,2-Dimethoxyethan wird mit einem Überschuss (6 mmol) einer 1.5 M-Lösung von NaOH in Wasser behandelt. Die Mischung wird für 30 min bei Raumtemperatur gerührt und das Lösungsmittel wird anschließend im Vakuum entfernt. Man erhält einen farblosen Rückstand, Natriumbis(pentafluorethyl)phosphinit, (C₂F₅)₂PONa.
¹⁹F NMR (Dimethoxyethan; Standard: CCl₃F), δ, ppm: -81.1 d (2CF₃), - 126.3 d,d,m (CF₂, F_{A}), -127.4 d,d,m (CF₂, F_{B}), ²*J*_{P,F(A)} = 67 Hz, ²*J*_{P,F(B)} = 54 Hz, ²*J*_{F(A),F(B)} = 314 Hz, ³*J*_{P,F} = 12 Hz.
³¹P NMR (Dimethoxyethan; Standard: 85 % H₃PO₄), δ, ppm: 109.2 m.

### Beispiel 8: Bis(pentafluorethyl)phosphinige Säure

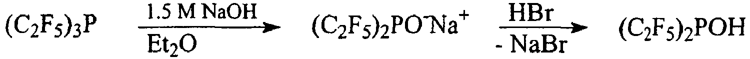

Zu einer Lösung von 5.2 g (13.3 mmol) Tris(pentafluorethyl)phosphin in 50 ml Diethylether werden 29 mmol einer 1,5 molaren wässrigen Natronlauge gegeben und bei Raumtemperatur 15 Minuten gerührt. Nach dem Entfernen der wässrigen Phase werden 50 ml 1,6-Dibromhexan zugegeben und alle flüchtigen Bestandteile über Nacht im Vakuum entfernt. Das Reaktionsgemisch wird mit 13 mmol HBr umgesetzt und das Produkt mittels einer fraktionierten Kondensation (3 Kühlfallen -30 °C, -78 °C, -196 °C) vom Reaktionsgemisch abgetrennt. Die Verbindung ist bei Raumtemperatur unter Inertgasbedingungen stabil.

Das Produkt wird mittels NMR-Spektroskopie charakterisiert. Das Spektrum entspricht den in Beispiel 2 angegebenen Werten.

### Beispiel 9: Chlorbis(pentafluorethyl)phosphin

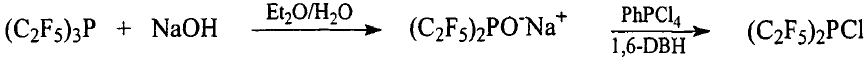

4.8 g (12,4 mmol) Tris(pentafluorethyl)phosphin werden auf 50 ml Ether kondensiert und unter Rühren mit 25 mmol 1,5 molarer Natronlauge versetzt. Nach 30 Minuten wird die separierte organische Phase mit 50 ml 1,6-Dibromhexan versetzt und alle flüchtigen Bestandteile über Nacht im Vakuum entfernt.

3,5 g (12,6 mmol) PhPCl₄ werden in 1,6-Dibromhexan gelöst, im Vakuum entgast und bei 0 °C zu der Phosphinit-Lösung getropft. Nach 10 Minuten rühren wird das Produkt, Chlorbis(pentafluorethyl)phosphin, mittels einer fraktionierten Kondensation (-196 °C Kühlfalle) vom Reaktionsgemisch abgetrennt. Die Verbindung ist bei Raumtemperatur unter Inertgasbedingungen stabil.

Das Produkt wird mittels NMR-Spektroskopie charakterisiert. Das Spektrum entspricht den in Beispiel 1 angegebenen Werten.

### Beispiel 10: Bis(pentafluorethyl)-4-pentenylphosphinit

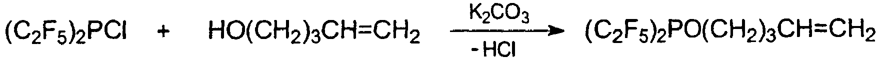

0.13 g (1.5 mmol) 4-penten-1-ol werden mit 0.21 g (1.5 mmol) K₂CO₃ in CH₂Cl₂ vorgelegt und 0.46 g (1.5 mmol) von Bis(pentafluorethyl)phosphinigsäurechlorid, (C₂F₅)₂PCl, aufkondensiert. Nach 20-minütigem Rühren bei Raumtemperatur wird der Niederschlag abfiltriert. Das Produkt, Bis(pentafluorethyl)-5-penten-1-ylphosphinit, eine farblose Flüssigkeit, wird durch eine fraktionierte Kondensation isoliert und spektroskopisch charakterisiert.
¹⁹F NMR (CDCl₃; Standard: CCl₃F), δ, ppm: -81.8 d (2CF₃), -122.4 d (2CF_{2,}), ²*J*_{P,F} = 74 Hz, ³*J*_{P,F} = 13 Hz.
³¹P{¹⁹F} NMR (CDCl₃; Standard: 85 % H₃PO₄), δ, ppm: 105.6 t, ³*J*_{P,H} = 8 Hz.

### Beispiel 11: Bis(pentafluorethyl)-9-decenylphosphinit

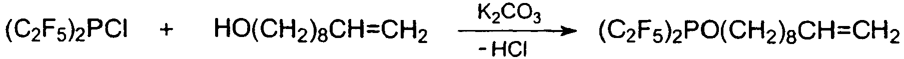

0.31 g (1.9 mmol) 9-Decen-1-ol werden mit überschüssigem K₂CO₃ in CH₂Cl₂ vorgelegt und 0.64 g (2.1 mmol) von Bis(pentafluorethyl)phosphinigsäurechlorid, (C₂F₅)₂PCl, aufkondensiert. Nach 30-minütigem Rühren bei Raumtemperatur wird der Niederschlag abfiltriert und flüchtige Substanzen im Vakuum entfernt. Das Produkt, Bis(pentafluorethyl)-9-decenylphosphinit, verbleibt als eine farblose, ölige Flüssigkeit, die wird spektroskopisch charakterisiert.

¹⁹F NMR (CDCl₃; Standard: CCl₃F), δ, ppm: -81.9 d (2CF₃), -122.4 d (2CF₂,), ³*J*_{P,F} = 74 Hz, ²*J*_{P,F} = 13 Hz.
³¹P{¹⁹F} NMR (CDCl₃; Standard: 85 % H₃PO₄), δ, ppm: 105.5 m.

### Beispiel 12: Platin-Komplex mit Bis(pentafluorethyl)phosphinigsäure

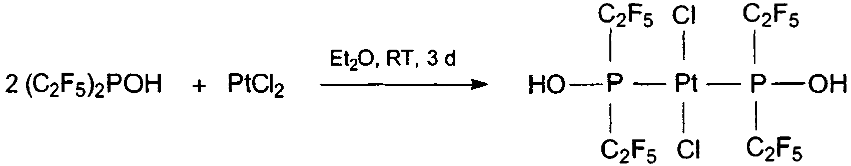

Eine Mischung von 0.286 g (1 mmol) Bis(pentafluorethyl)phosphinigsäure, erhältlich nach Beispiel 1, und 0.113 g (0.4 mmol) Platindichlorid wird in 5 ml trockenem Diethylether bei Raumtemperatur für drei Tage gerührt. Die Mischung wird gelb. Nach Entfernen von Diethylether wird der Platinkomplex als Feststoff isoliert. Die Verbindung ist bei Raumtemperatur unter Inertgasbedingungen stabil.

¹⁹F NMR (Diethylether; Standard: CCl₃F), δ, ppm: -79.2 s (4CF₃), -113.9 d,d,m (CF₂, F_{A}), -117.1 d,d,m (CF₂, F_{B}).
³¹P NMR (Diethylether; Standard: 85 % H₃PO₄), δ, ppm: 81.4 m.
¹⁹⁵Pt NMR (Diethylether; Standard: Na₂PtCl₆), δ, ppm: -3941 t, ¹*J*_{Pt,P} = 3313 Hz.
¹H NMR (C₆D₆; Standard: TMS), δ, ppm: 5.8 br.t.

Elementaranalyse:
gefunden 11.65% C, 0.23% H, berechnet 11.46% C, 0.24% H.

### Beispiel 13: Palladium-Komplex mit Bis(pentafluorethyl)phosphinigsäure

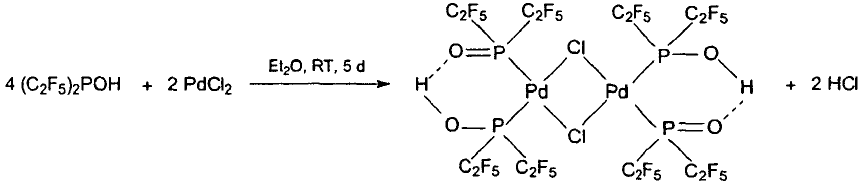

Eine Mischung von 0.858 g (3 mmol) Bis(pentafluorethyl)phosphinigsäure, erhältlich nach Beispiel 1, und 0.241 g (1.36 mmol) Palladiumchlorid wird in 25 ml trockenem Diethylether bei Raumtemperatur für fünf Tage gerührt. Die Mischung wird gelb. Nach Entfernen von Diethylether, wird der Palladiumkomplex als Feststoff isoliert.

¹⁹F NMR (Diethylether; Standard: CCl₃F), δ, ppm: -79.5 s (4CF₃), -110.5 d,d,m (CF₂, F_{A}), -116.2 d,d,m (CF₂, F_{B}).
³¹P NMR (Diethylether; Standard: 85 % H₃PO₄), δ, ppm: 86.3 m.

Elementaranalyse:
gefunden 13.82% C, 0.20% H, berechnet 13.48% C, 0.20% H.

Dieser Palladiumkomplex existiert in Lösung bei Anwesenheit von HCl im Gleichgewicht mit dem entsprechenden Mono-Pd-Komplex I. Durch Entfernen von HCl und des Lösungsmittls erhält man jedoch immer den Di-Pd-Komplex.

### Gleichgewichtsreaktion:

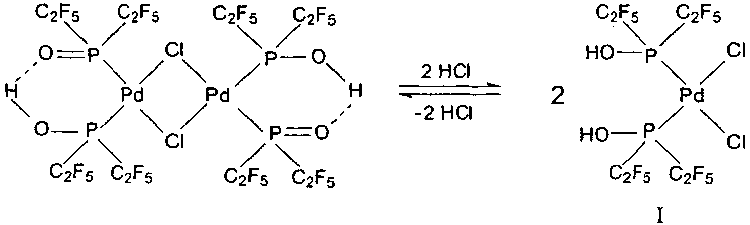

### Beispiel 14: Synthese von Biphenyl via Suzuki Kupplung

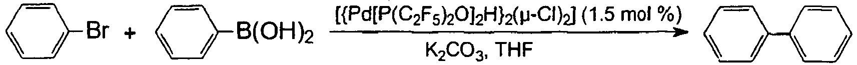

14a) 1.57 g (10 mmol) Brombenzol und 4.15 g (30 mmol) K₂CO₃ werden zu einer Lösung von 1.83 g (15 mmol) Phenylboronsäure in 20 ml Tetrahydrofuran zugegeben. Nach 15 minütigem Rühren bei Raumtemperatur werden 0.21 g (0.15 mmol) [{Pd[P(C₂F₅)₂O]₂H}₂(µ-Cl)₂], hergestellt nach Beispiel 13, zugegeben und das Reaktionsgemisch wird 3 Stunden unter Rückfluss erhitzt. Nach Kühlung und Zugabe von 100 ml Wasser, wird das Reaktionsgemisch mit 200 ml Hexan extrahiert. Die organische Phase wird mit Wasser gewaschen und mit MgSO₄ getrocknet. Nach Filtration und Lösungsmittelentfernung (im Vakuum) werden 0.99 g Biphenyl als weißer fester Stoff isoliert. Die Ausbeute beträgt 64 % bezogen auf eingesetztes Brombenzol.

Das Produkt, Biphenyl, wird spektroskopisch charakterisiert.

¹H NMR (CDCl₃; Standard: TMS), δ, ppm: 7.35 - 7.65 m (10 H).
¹³C {¹H} NMR (CDCl₃; Standard: TMS), δ, ppm: 127.2; 127.3; 128.7; 141.3. MS (20eV): m/z (%): 154 (100), [M⁺].

14b) 1.57 g (10 mmol) Brombenzol und 4.15 g (30 mmol) K₂CO₃ werden zu einer Lösung von 1.83 g (15 mmol) Phenylboronsäure in 20 ml Tetrahydrofuran zugegeben. Nach 15 minütigem Rühren bei Raumtemperatur werden 0.21 g (0.15 mmol) [{Pd[P(C₂F₅)₂O]₂H}₂(µ-Cl)₂], hergestellt nach Beispiel 13, zugegeben und das Reaktionsgemisch wird 18 Stunden unter Rückfluss erhitzt. Nach Kühlung und Zugabe von 100 ml Wasser, wird das Reaktionsgemisch mit 200 ml Hexan extrahiert. Die organische Phase wird mit Wasser gewaschen und mit MgSO₄ getrocknet. Nach Filtration und Lösungsmittelentfernung (im Vakuum) werden 1.29 g Biphenyl als weißer fester Stoff isoliert. Die Ausbeute beträgt 84 % bezogen auf eingesetztes Brombenzol.

Das Produkt, Biphenyl, wird spektroskopisch charakterisiert.

Das NMR-Spektrum entspricht den im Beispiel 14a) angegebenen Werten.

### 14c)

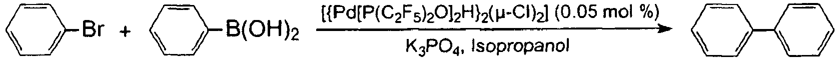

Zu einer Lösung von 5.13 g (42 mmol, 1.5 eq.) Phenylboronsäure in 60 ml Isopropanol werden (28 mmol, 1 eq.) Brombenzol und 9 g (42 mmol, 1.5 eq.) K₃PO₄ zugegeben. Es wird 45 Minuten bei Raumtemperatur gerührt und anschließend werden 0.02 g (14.03 µmol, 0.05 mol%)
[{Pd[P(C₂F₅)₂O]₂H}₂(µ-Cl)₂], hergestellt nach Beispiel 13, zugegeben und das Reaktionsgemisch wird 3 Stunden bei Raumtemperatur gerührt. Nach Zugabe von 100 ml Wasser, wird das Reaktionsgemisch mit 200 ml Hexan extrahiert. Die organische Phase wird mit gesättigter Natriumchlorid-Lösung gewaschen und mit MgSO₄ getrocknet. Nach Filtration und Lösungsmittelentfernung (im Vakuum) werden 3.16 g Biphenyl als weißer fester Stoff isoliert. Die Ausbeute beträgt 73 % bezogen auf die eingesetzte Menge an Brombenzol.
Das NMR-Spektrum entspricht den im Beispiel 14a) angegebenen Werten.

### Beispiel 15: Synthese von 2,4'-Difluorbiphenyl via Suzuki Kupplung

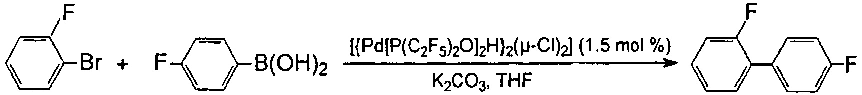

1.75 g (10 mmol) 1-Brom-4-fluorbenzol und 4.15 g (30 mmol) K₂CO₃ werden zu einer Lösung von 2.09 g (15 mmol) 4-Fluorphenylboronsäure in 20 ml Tetrahydrofuran zugegeben. Nach 15 minütigem Rühren bei Raumtemperatur werden 0.21 g (0.15 mmol) [{Pd[P(C₂F₅)₂O]₂H}₂(µ-Cl)₂], hergestellt nach Beispiel 13, zugegeben und das Reaktionsgemisch wird 18 Stunden gekocht. Nach Kühlung und Zugabe von 100 ml Wasser wird das Reaktionsgemisch mit 200 ml Hexan extrahiert. Die organische Phase wird mit Wasser gewaschen und mit MgSO₄ getrocknet. Nach Filtration und Lösungsmittelentfernung (im Vakuum) werden 1.35 g 2,4'-Difluorbiphenyl als weißer fester Stoff isoliert. Die Ausbeute beträgt 70 %, bezogen auf eingesetztes 1-Brom-4-fluorbenzol.
Das Produkt, 2,4'-Difluorbiphenyl, wird spektroskopisch charakterisiert.

¹H NMR (MHz, CDCl₃; Standard: TMS), δ, ppm: 7.20 m (1 H), 7.37 m (1 H), 7.25 m (1 H), 7.45 m (1 H), 7.57 m (2H), 7.18 m (2H).

¹⁹F NMR (282.4 MHz, CDCl₃; Standard: CCl₃F), δ, ppm: -114.6 m (1F), - 118.1 m (1 F).

¹³C {¹H} NMR (75.47 MHz, CDCl₃; Standard: TMS), δ, ppm: 162.5 d (1 C), ¹*J*_{C,F} = 247 Hz; 159.7 d (1C), ¹*J*_{C,F} = 248 Hz; 131.8 d (1C), ³*J*_{C,F} = 3.9 Hz; 130.8 d (1C), ³*J*_{C,F} = 3.0 Hz; 130.6 d (2C), ³*J*_{C,F} = 2.9 Hz; 129.1 d (1C), ³*J*_{C,F} = 8.2 Hz; 128.1 d (1 C), ²*J*_{C,F} = 13.4 Hz; 124.4 d (1 C), ⁴*J*_{C,F} = 3.7 Hz; 116.2 d (1C), ²*J*_{C,F} = 22.6 Hz; 115.4 d (2C), ²*J*_{C,F} = 21.5 Hz.

MS (20eV): m/z (%): 190 (100), [M⁺].

### Beispiel 16: Synthese von (E)-3-(Phenyl)acrylsäurebutylester; [(E)-Butylcinnamat] via Heck Kupplung

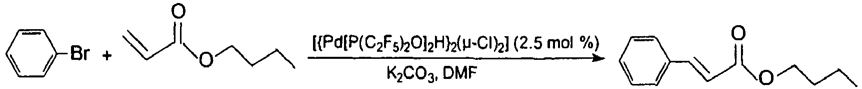

0.38 g (2.9 mmol) Butylacrylat und 0.30 g (2.2 mmol) K₂CO₃ werden zu einer Lösung von 0.32 g (2.0 mmol) Brombenzol in 20 ml Dimethylformamid zugegeben. Nach 5 minütigem Rühren bei Raumtemperatur werden 0.08 g (0.05 mmol) [{Pd[P(C₂F₅)₂O]₂H}₂(µ-Cl)₂], hergestellt nach Beispiel 13, zugegeben und das Reaktionsgemisch wird 20 Stunden unter Rückfluss erhitzt. Nach Kühlung und Zugabe von 100 ml Wasser wird das Reaktionsgemisch mit 100 ml Diethylether extrahiert. Die organische Phase wird mit Wasser gewaschen und mit MgSO₄ getrocknet. Nach Filtration und Lösungsmittelentfernung (im Vakuum) werden 0.26 g (E)-3-(Pheny)acrylsäurebutylester als farbloses Öl isoliert. Die Ausbeute beträgt 64 %, bezogen auf eingesetztes Brombenzol.

Das Produkt, (E)-3-(Pheny)acrylsäurebutylester, wird spektroskopisch charakterisiert.

¹H NMR (CDCl₃; Standard: TMS), δ, ppm: 7.70 d (1H, CH=), ³*J*_{H,H} = 16 Hz; 7.55 m (2H, ArH); 7.40 m (3H, ArH); 6.46 d (1H, =CHCO₂Bu), ³*J*_{H,H} = 16 Hz; 4.23 t (2H, CH₂), ³*J*_{H,H} = 6,5 Hz; 1.71 m (2 H, CH₂); 1.45 m (2H, CH₂); 0.98 t (3H, CH₃); ³*J*_{H,H} = 7,5 Hz.

¹³C{¹H} NMR (CDCl₃; Standard: TMS), δ, ppm: 167.0; 144.5; 134.4; 130.2; 128.8; 128.0; 118.2; 64.3; 30.7; 19.1; 13.7.

### Beispiel 17: Synthese von 2-Fluor-3-(Phenyl)acrylsäurebutylester; via Heck Kupplung

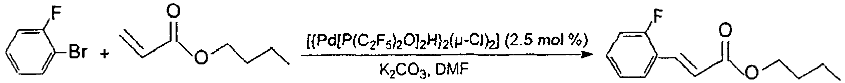

Zu einer Lösung von 0.36 g (2.0 mmol, 1.0 eq.) 1-Brom-2-fluorbenzol in 20 ml Dimethylformamid werden 0.38 g (2.9 mmol, 1.5 eq.) Butylacrylat und 0.3 g (2.2 mmol, 1.1 eq.) K₂CO₃ zugegeben. Es wird für 5 Minuten bei Raumtemperatur gerührt. Anschließend werden 0.08 g (0.05 mmol) [{Pd[P(C₂F₅)₂O]₂H}₂(µ-Cl)₂], hergestellt nach Beispiel 13, zugegeben und das Reaktionsgemisch wird 20 Stunden unter Rückfluss erhitzt. Man erhält 2-Fluor-3-(Phenyl)acrylsäurebutylester.

¹⁹F NMR (282.4 MHz, CDCl₃; Standard: CCl₃F), δ, ppm: -116.3 m.

¹H NMR (300.13 MHz, CDCl₃; Standard: TMS), δ, ppm: 7.77 d (1 H, CH=), ³*J*_{H,H} = 16 Hz; 7.48 t,d (1 H, ArH), ³*J*_{H,H} = 7.6 Hz, ⁴*J*_{H,H} = 1.8 Hz; 7.29 m (1H, ArH); 7.06 m (2H); 6.49 d (1H, =CHCO₂Bu), ³*J*_{H,H} = 16 Hz; 4.18 t (2H, CH₂), ³*J*_{H,H} = 6.7 Hz; 1.65 m (2 H, CH₂); 1.40 m (2H, CH₂); 0.92 t (3H, CH₃); ³*J*_{H,H} = 7.2 Hz.

¹³C{¹H} NMR (75.47 MHz, CDCl₃; Standard: TMS), δ, ppm: 166.7 s; 161.3 d (¹J_{C,F} = 254 Hz); 137.0 s; 131.8 d (^{x}J_{C,F} = 8.7 Hz); 128.9 d (^{x}J_{C,F} = 2.9 Hz); 124.3 d (^{x}J_{C,F} = 3.6 Hz); 122.5 d (²J_{C,F} = 11.6 Hz); 120.8 (⁴J_{C,F} = 6.5 Hz); 116.0 d (^{x}J_{C,F} = 21.9 Hz); 64.5 s; 30.8 s; 19.1 s; 13.6 s.

### Beispiel18: Synthese von 3-Fluorbiphenyl via Suzuki Kupplung

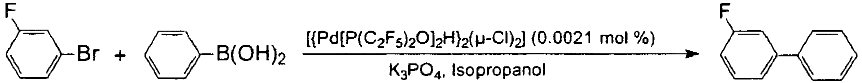

Zu einer Lösung von 12.83 g (105.3 mmol, 1.5 eq.) Phenylboronsäure in 200 ml Isopropanol werden 12,27 (70.2 mmol, 1 eq.) 1-Brom-3-fluorbenzol und 44.7 g (210.5 mmol, 3 eq.) K₃PO₄ zugegeben. Es wird für 4 Stunden bei Raumtemperatur gerührt. Anschließend werden 0.0021 g (14.8 µmol, 0.0021 mol%) [{Pd[P(C₂F₅)₂O]₂H}₂(µ-Cl)₂], hergestellt nach Beispiel 13, zugegeben und das Reaktionsgemisch wird 20 Stunden bei Raumtemperatur gerührt. Man erhält quantitativ 3-Fluorbiphenyl.

### Beispiel 19: Synthese von Bis(pentafluorethyl)thiophosphiniger Säure

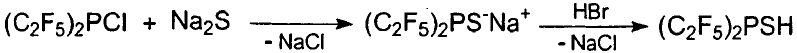

0.04 g (0.5 mmol) Na₂S werden in Dichlormethan vorgelegt und 0.5 mmol von Bis(pentafluorethyl)phosphinigsäurechlorid, (C₂F₅)₂PCl, erhältlich nach Beispiel 2, aufkondensiert. Nach 20 Stunden Rühren werden flüchtige Substanzen im Vakuum entfernt. Es verbleibt ein farbloser Niederschlag, der in Diethylether gelöst und mit 1,6-Dibromhexan versetzt wird. Flüchtige Bestandteile werden im Vakuum entfernt. Das Reaktionsgemisch wird mit überschüssigem gasförmigem HBr versetzt und das Produkt in einer fraktionierten Kondensation isoliert und spektroskopisch charakterisiert.

¹⁹F NMR (Lösungsmittel: C₆D₆ ; Standard: CCl₃F), δ, ppm: -77.2 d (2CF₃), - 112.4 d (2CF₂), ²*J*_{P,F} = 61 Hz, ³*J*_{P,F} = 15 Hz.

³¹P{¹⁹F} NMR (Lösungsmittel: C₆D₆; Standard: 85 % H₃PO₄), δ, ppm: 17.4 d, ²*J*_{P,H} = 25 Hz.

## Patentansprüche

1. Übergangsmetallkomplexe enthaltend mindestens eine Verbindung der Formel I 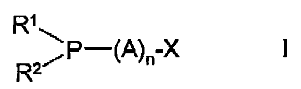 wobei
R¹ und R² jeweils unabhängig voneinander stehen für geradkettige oder verzweigte Perfluoralkylgruppen mit 2 bis 12 C-Atomen,
A steht für O,
X steht für H oder Alkyl mit 1 bis 18 C-Atomen, wenn n für die ganze Zahl 1 steht.

2. Übergangsmetallkomplexe nach Anspruch 1 entsprechend den Formeln III bis VII 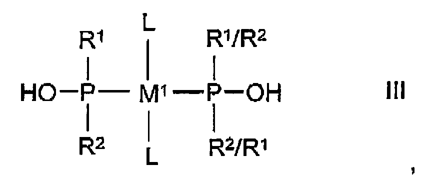 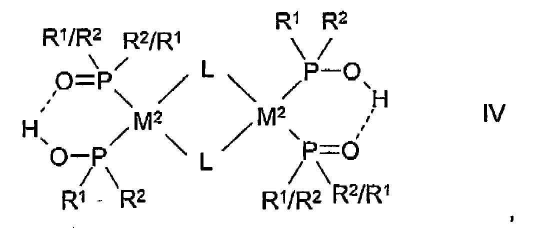 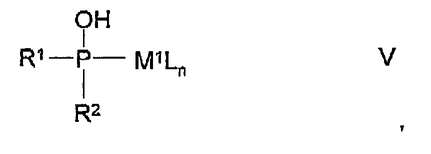 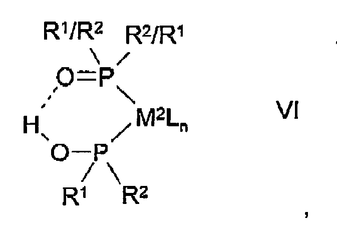 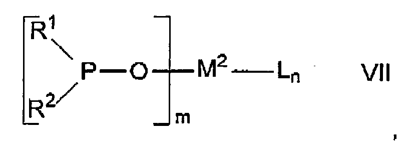 wobei
M¹ und M² ein Übergangsmetall ist, ausgewählt aus der Gruppe Pt, Pd, Rh, Ir, Ru, Ni, Co, Fe, Au, Os, Ti, Zr, V, Cr, Mn, Mo, W, Re, Y, Nd, Yb, Sm, Tb oder La,
L ein anionischer, neutraler oder kationisch geladener Ligand ist,
R¹ und R² jeweils unabhängig voneinander stehen für geradkettige oder verzweigte Perfluoralkylgruppen mit 2 bis 12 C-Atomen und R¹/R² in Formel IV steht für R¹ oder R² bzw. R²/R¹ in Formel IV steht für R² oder R¹ und R⁰ steht für eine geradkettige oder verzweigte Alkylgruppe mit 1 bis 8 C-Atomen und
n die Anzahl der Liganden bedeutet, die zur Absättigung der Valenzen von M¹ oder M² benötigt werden
und
wobei
in Formel VII die Summe n+m der Koordinations-Zahl des Metalls M² entspricht.

3. Übergangsmetallkomplexe nach Anspruch 2, **dadurch gekennzeichnet, dass** M¹ und M² ausgewählt werden aus Pt, Pd, Rh, Ru und Ni.

4. Übergangsmetallkomplex nach Anspruch 1 oder 2, entsprechend der Formel

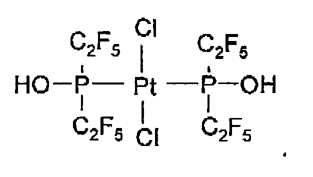

5. Übergangsmetallkomplexe nach Anspruch 1 oder 2, entsprechend der Formeln

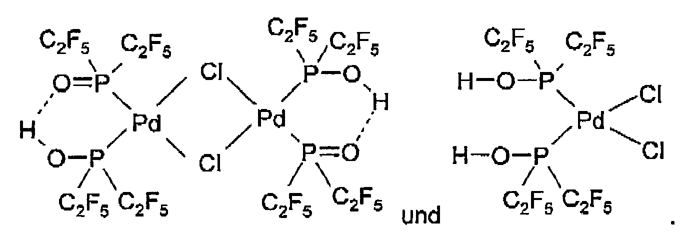

6. Verfahren zur Herstellung der Übergangsmetallkomplexe nach einem oder mehreren der Ansprüche 1 bis 3, **dadurch gekennzeichnet, dass** mindestens eine Verbindung der Formel I wie in Anspruch 1 beschrieben mit einer Precursorverbindung enthaltend das Metall umgesetzt wird.

7. Verwendung von Übergangsmetallkomplexen nach einem oder mehreren der Ansprüche 1 bis 5 als Katalysator, zur Behandlung von Oberflächen oder zur Herstellung von Nanopartikeln des entsprechenden Metalls.

8. Bis(pentafluorethyl)phosphinigsäure.

## Claims

1. Transition-metal complexes containing at least one compound of the formula I 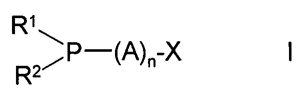 where
R¹ and R² each stand, independently of one another, for straight-chain or branched perfluoroalkyl groups having 2 to 12 C atoms,
A stands for O,
X stands for H or alkyl having 1 to 18 C atoms if n stands for the integer 1.

2. Transition-metal complexes according to Claim 1, conforming to the formulae III to VII 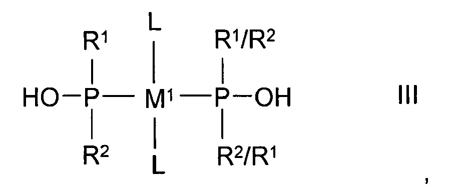 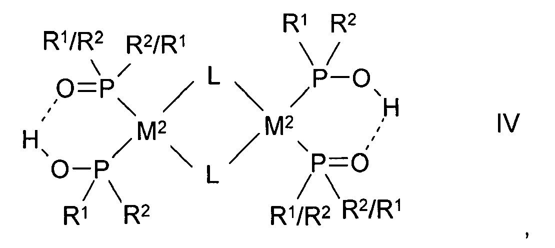 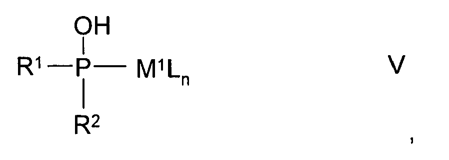 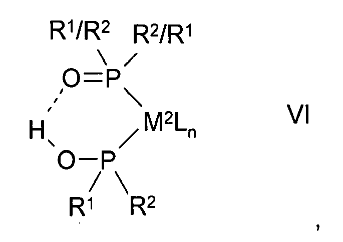 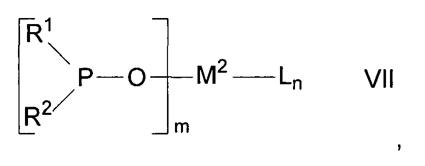 where
M¹ and M² are transition metals selected from the group Pt, Pd, Rh, Ir, Ru, Ni, Co, Fe, Au, Os, Ti, Zr, V, Cr, Mn, Mo, W, Re, Y, Nd, Yb, Sm, Tb or La,
L is an anionic, neutral or cationically charged ligand,
R¹ and R² each stand, independently of one another, for straight-chain or branched perfluoroalkyl groups having 2 to 12 C atoms and R¹/R² in formula IV stands for R¹ or R² or R²/R¹ in formula IV stands for R² or R¹ and R⁰ stands for a straight-chain or branched alkyl group having 1 to 8 C atoms, and
n denotes the number of ligands required to saturate the valences of M¹ or M²,
and
where
in formula VII, the sum n+m corresponds to the coordination number of the metal M².

3. Transition-metal complexes according to Claim 2, **characterised in that** M¹ and M² are selected from Pt, Pd, Rh, Ru and Ni.

4. Transition-metal complex according to Claim 1 or 2, conforming to the formula

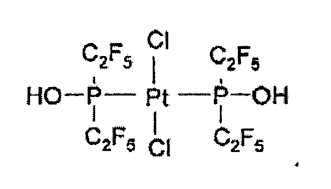

5. Transition-metal complexes according to Claim 1 or 2, conforming to the formulae

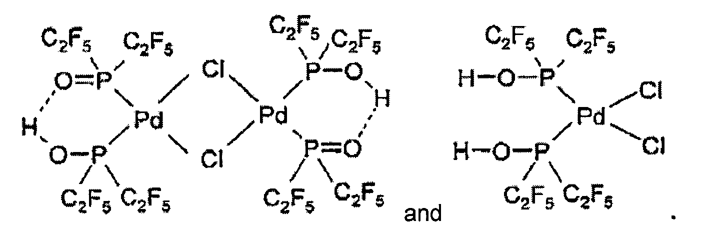

6. Process for the preparation of the transition-metal complexes according to one or more of Claims 1 to 3, **characterised in that** at least one compound of the formula I as described in Claim 1 is reacted with a precursor compound containing the metal.

7. Use of transition-metal complexes according to one or more of Claims 1 to 5 as catalyst, for the treatment of surfaces or for the production of nanoparticles of the corresponding metal.

8. Bis(pentafluoroethyl)phosphinous acid.

## Revendications

1. Complexes de métaux de transition contenant au moins un composé de la formule I 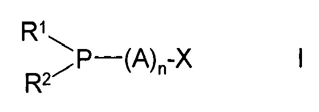 dans laquelle
R¹ et R² représentent chacun, indépendamment l'un de l'autre, des groupes perfluoroalkyle en chaîne droite ou ramifiés comportant 2 à 12 atomes de C,
A représente O,
X représente H ou alkyle comportant 1 à 18 atomes de C si n représente l'entier 1.

2. Complexes de métaux de transition selon la revendication 1, conformément aux formules III à VII 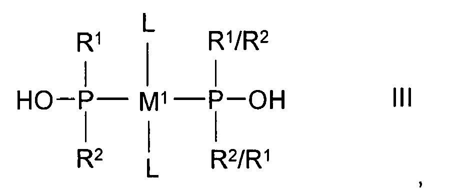 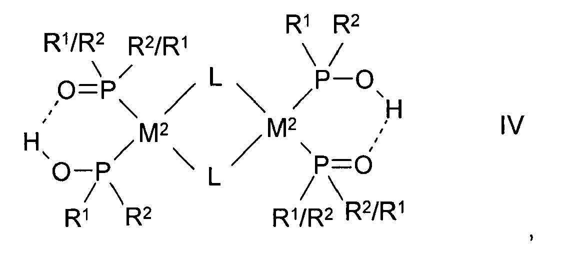 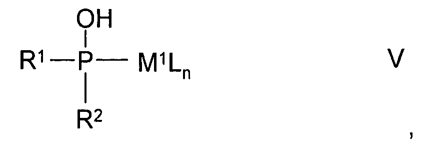 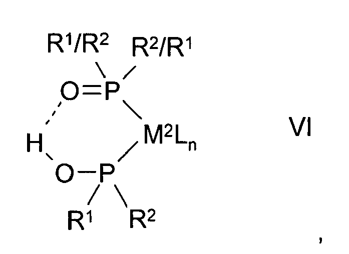 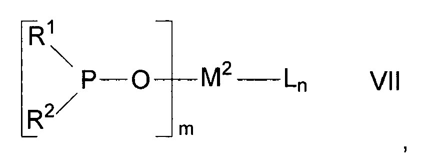 dans lesquelles
M¹ et M² sont des métaux de transition choisis parmi le groupe Pt, Pd, Rh, Ir, Ru, Ni, Co, Fe, Au, Os, Ti, Zr, V, Cr, Mn, Mo, W, Re, Y, Nd, Yb, Sm, Tb ou La,
L est un ligand anionique, neutre ou chargé cationiquement,
R¹ et R² représentent chacun, indépendamment l'un de l'autre, des groupes perfluoroalkyle en chaîne droite ou ramifiés comportant 2 à 12 atomes de C et R¹/R² dans la formule IV représente R¹ ou R² ou R²/R¹ dans la formule IV représente R² ou R¹ et R⁰ représente un groupe alkyle en chaîne droite ou ramifié comportant 1 à 8 atomes de C, et
n représente le nombre de ligands requis pour saturer les valences de M¹ ou M²,
et
où
dans la formule VII, la somme n+m correspond au nombre de coordinations du métal M².

3. Complexes de métaux de transition selon la revendication 2, **caractérisés en ce que** M¹ et M² sont choisis parmi Pt, Pd, Rh, Ru et Ni.

4. Complexes de métaux de transition selon la revendication 1 ou 2, conformément à la formule

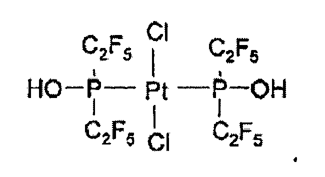

5. Complexes de métaux de transition selon la revendication 1 ou 2, conformément aux formules

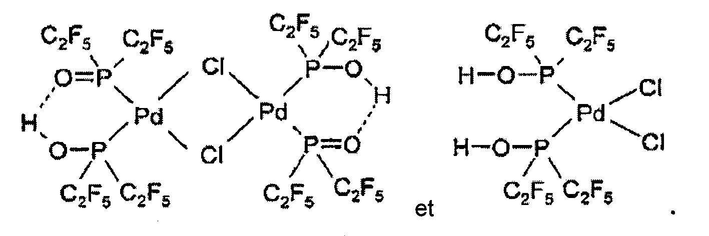

6. Procédé pour la préparation des complexes de métaux de transition selon une ou plusieurs des revendications 1 à 3, **caractérisé en ce qu'**au moins un composé de la formule I comme décrit selon la revendication 1 est amené à réagir avec un composé de précurseur contenant le métal.

7. Utilisation de complexes de métaux de transition selon une ou plusieurs des revendications 1 à 5 en tant que catalyseur, pour le traitement de surfaces ou pour la production de nanoparticules du métal correspondant.

8. Acide bis(pentafluoroéthyl)phosphineux.
